# NEW EUROPEAN PATENT SPECIFICATION

(11) **EP 3 077 456 B2**
(45) Date of publication and mention of the opposition decision: **30.07.2025**
(45) Mention of the grant of the patent: 07.07.2021
(21) Application number: 13808407.4
(22) Date of filing: 04.12.2013
(51) Int. Cl.: C08L 23/08, C08L 31/04, C08K 5/14

(54) **HEAT RESISTANT ETHYLENE VINYL ACETATE COPOLYMER COMPOSITION AND PROCESS FOR ITS PRODUCTION**
WÄRMERESISTENTE ETHYLENVINYLACETATCOPOLYMERZUSAMMENSETZUNG UND VERFAHREN ZU DEREN HERSTELLUNG
COMPOSITION DE COPOLYMÈRE D'ÉTHYLÈNE-ACÉTATE DE VINYLE RÉSISTANTE À LA CHALEUR ET SON PROCÉDÉ DE PRODUCTION

(43) Date of publication of application: 12.10.2016
(73) Proprietor: E. I. du Pont de Nemours and Company, Wilmington, DE 19898 (US)
(72) Inventor: ORIANI, Steven R., Landenberg, Pennsylvania 19350 (US); STEWART, Mark Aaron, Wilmington, Delaware 19806 (US)
(74) Representative: Gordon, Kirsteen Helen
(86) International application number: PCT/US2013/072988
(87) International publication number: WO 2015/084336

(56) References cited:
- EP-A1- 2 098 566
- EP-A1- 2 098 566
- WO-A1-2014/042943
- WO-A1-2014/089136
- US-A- 4 348 502
- US-A- 4 348 502
- Expenmental report
- Levamelt product portfolio
- Arlanxeo Performance Elastomers

## Description

### FIELD OF THE INVENTION

The present invention is directed to a peroxide curable ethylene vinyl acetate copolymer composition, a process for producing a thermoset ethylene vinyl acetate elastomer composition having enhanced heat-resistance and to articles formed from the thermoset elastomer composition.

### BACKGROUND OF THE INVENTION

Ethylene vinyl acetate (EVA) copolymers are well-known synthetic materials formed by copolymerizing ethylene and vinyl acetate. EVA copolymers may be crosslinked by free radial generators such as peroxides, azides, or high energy radiation to form elastomeric or flexible articles, depending on the vinyl acetate content. As disclosed in "Levapren® Ethylene Vinyl Acetate (EVM)" literature LXS-KA 017e, 2010-10, 01/2012, EVA copolymer crystallinity and melting point increase with decreasing vinyl acetate content. When the vinyl acetate content is sufficiently low that the melting peak temperature of the EVA copolymer exceeds about 100°C, the EVA copolymer becomes difficult to mix with peroxide without causing scorch or (i.e., premature curing), and if successful, the high crystallinity results in a stiff and inelastic cured article. Therefore, the EVA copolymers useful in this invention have a melting peak temperature less than about 100°C. The ethylene vinyl acetate (EVA) copolymers may contain only copolymerized ethylene units and vinyl acetate units or may comprise copolymerized ethylene units, vinyl acetate units, and additional copolymerized monomers, for example esters of unsaturated carboxylic acids, such as methyl acrylate or butyl acrylate. Examples of commercially available EVA copolymers suitable for use in this invention include certain Elvax^{®} resin products from E. I. du Pont de Nemours and Company and Levapren^{®} products from Lanxess Corp.

In view of their low cost compared to other flexible or elastic polymers, EVA copolymers are widely used in the manufacture of wire and cable jacketing as well as in the production of automotive parts such as hoses and seals.

Resistance to heat aging is a particularly desirable property in rubber parts that are used in under the hood automotive applications, e.g. hoses, gaskets, and seals. Because such parts may be exposed to temperatures in excess of 175°C for periods of several hours on a regular basis, degradation of physical properties through oxidative embrittlement can occur. In cured ethylene vinyl acetate (EVA) articles, this often results in a reduction in extensibility and an increase in hardness and modulus of the rubber article. Such effects are disclosed for example in EP1081188. Methods to enhance heat resistance, specifically hot air aging resistance, of EVA articles have involved attempts to identify more effective antioxidant systems. However, there is still a need to improve the heat or hot air aging resistance of these copolymers.

It has now been found that it is possible to produce cured EVA articles that exhibit excellent heat aging resistance by dispersing small amounts of polyamide (up to 10wt%) in the EVA copolymer.

A number of EVA copolymer-polyamide blend compositions have been disclosed in the prior art. For example, it is known to add uncured EVA copolymers (i.e. gums) to polyamides to form toughened thermoplastic compositions. U.S. Patent 4,174,358 exemplifies the use of uncured EVA copolymers at levels up to 20 wt% as toughening additives for polyamides. A compatibilizer such as a maleic anhydride grafted EVA copolymer may also be included in the EVA copolymer-polyamide blend, as disclosed in J. Polymer Science: Part B: Polymer Physics, Vol. 47, 877-887 (2009). The polyamide component in these compositions comprises the continuous polymer matrix and the uncured EVA copolymer is a minor additive. When polyamide comprises the continuous phase in the blend the composition generally cannot be processed at temperatures below the melting temperature of the polyamide, or can be processed only with great difficulty at such temperatures.

It is also known to form thermoplastic elastomer compositions comprising EVA copolymer and polyamide. For example, U.S. Patent 5,948,503 discloses compositions comprising an uncured elastic polymer, a polyamide in the form of fine fibers, and a polyolefin having a melting temperature from 80°C to 250°C. In addition, certain vulcanized compositions are disclosed therein.

Thermoplastic vulcanizates comprising EVA and polyamide, in which the EVA copolymer is dynamically crosslinked (i.e., crosslinked under shear mixing to create a dispersion of elastomer particles in a continuous phase of another polymer) are also known. Such compositions are disclosed in EP2098566 and US 4,348,502, and may be improved by the use of a coupling agent such as maleic anhydride grafted EVA copolymer as disclosed in US7691943.

U.S. Patent 7,608,216 and U.S. Patent Application Publication 2006/0100368 disclose compositions prepared by admixing an uncured elastomer, for example an EVA copolymer, with a thermoplastic polymer or another uncured (gum) elastomer. Techniques such as fractional curing, partial dynamic vulcanization, or the use of high performance reinforcing fillers are disclosed to increase the green strength of the uncured or partially cured compound. The admixed compositions may be subsequently crosslinked with a curing agent for the elastomer component.

WO 2014/042943 A1, a conflicting application published after the priority date of the present application, describes polyamide-filled ethylene vinyl acetate copolymer compositions containing 40 to 95 wt% of an ethylene vinyl acetate copolymer component and 5 to 60 wt % of a polyamide component. Compositions E9, E11, E14 and CE7 thereof are excluded by the proviso in the present claims.

It has now been found that when EVA copolymers having a melting peak temperature of about 100°C or less additionally comprise about 0.1wt% to 10wt% polyamide based on the total weights of EVA copolymer and polyamide in the blend, the resultant compositions, when cured by a free radical generator, exhibit enhanced resistance to physical property loss during hot air aging and represent thermoset compositions. In addition, such compositions maintain similar Shore A hardness, tensile strength, tensile elongation to break, and other physical properties of the unmodified cured EVA article.

### SUMMARY OF THE INVENTION

Disclosed herein is heat resistant curable ethylene vinyl acetate (EVA) copolymer - polyamide blend composition comprising: (A) from 99.9wt% to 90wt% of an EVA component selected from one or more of (i) amorphous EVA copolymers; (ii) EVA copolymers wherein each has melting peak temperatures of 100°C or less as determined by ASTM D3418-08; or (iii) combinations thereof; (B) from 0.1wt% to 10wt% of one or more polyamides; wherein the weight percent of each of the polyamide and EVA component is based on the total combined amount of EVA component and polyamides in the blend, and the blend composition has a Mooney viscosity determined according to ASTM D1646, ML 1+4 at 100°C less than 200; and (C) a peroxide curative, with the proviso that Compositions E9, E11, E14 and CE7 of WO 2014/042943 A1 are excluded, wherein said curable composition does not contain ethylene copolymers comprising copolymerized or grafted acid reactive functionality, and wherein said curable composition, upon curing, forms a thermoset material.

The following information is provided in the experimental part of conflicting WO 2014/042943 on Compositions E9, E11, E14 and CE7 referred to in this proviso. All parts are by weight unless otherwise indicated.

### Materials

### EVA copolymers

- A1: Copolymer of ethylene and 45 wt% vinyl acetate, Mooney viscosity (ML 1+4) at 100°C of 19, available from Lanxess Corp. as Levapren^{®} 450 resin.
- A2: Copolymer of ethylene and 50 wt% vinyl acetate, Mooney viscosity (ML 1+4) at 100°C of 25, available from Lanxess Corp. as Levapren^{®} 500 resin.
- A3: Copolymer of ethylene and 40 wt% vinyl acetate, Mooney viscosity (ML 1+4) at 100°C of 17, available from E.I. du Pont de Nemours and Company, Wilmington, DE (DuPont Co.) as Elvax^{®} 40L03 resin.

### Polyamides

P1 Polyamide 6, inherent viscosity 1.450 dL/g, melting peak temperature 220°C, available from BASF as Ultramid^{®} B40.

P2 Polyamide 6, inherent viscosity of 0.867 dL/g, melting peak temperature of 220°C, available from BASF as Ultramid^{®} B24.

P3 Polyamide copolymer comprising copolymerized units of hexamethylene diamine, adipic acid, and terephthalic acid, with an inherent viscosity of 0.892 dL/g and a melting peak temperature of 262°C

P4 Polyamide 6/10, having an inherent viscosity of 1.167 dL/g and melting peak temperature of 225°C, available from E.I. DuPont de Nemours and Company.

### Compatibilizers

C1 Vamac^{®} Ultra HT elastomer, available from E.I. DuPont de Nemours and Company, Wilmington, DE (DuPont Co.). C2 Fusabond^{®} C250 compatibilizer, available from E.I. DuPont de Nemours and Company Wilmington, DE (DuPont Co.).

### Other ingredients

Peroxide: mixture of the para and meta isomers of an α,α'-bis(tert-butylperoxy)-diisopropylbenzene, 40% peroxide active ingredient on kaolin clay carrier, Vul-Cup^{®} 40KE, available from Arkema Inc.

Coagent: N,N'-(m-phenylene)dimaleimide, HVA-2, available from E.I. DuPont de Nemours and Company Wilmington, DE.
Carbon black: N550 grade, Sterling^{®} SO carbon black, available from Cabot Corp.
Silica: available from Evonik Corp. as Ultrasil^{®} VN3,
Antioxidant (AO): Naugard^{®} 445 antioxidant, available from Chemtura Corp.

### Test Methods

Mooney viscosity: ASTM D1646, ML 1+4, 100°C.

Cure response: Measured per ASTM D5289-07a using an MDR 2000 from Alpha Technologies operating at 0.5° arc. Test conditions of 177°C for 24 minutes. ML refers to the minimum torque value measured during the test, while MH refers to the maximum torque value attained after ML. T50 and T90 refer to the time to 50% and 90% torque, respectively, of the difference between MH and ML.

Compression set: ISO 815-1:2008, 25% compression, using type B molded buttons prepared using press cure conditions of 175°C for 10 minutes followed by a 30 minute post cure in a hot air oven at 175°C. Time and temperature of the test conditions as specified. Data reported are the median values of 3 specimens.

Tensile properties: ASTM D412-06, die C. Samples cut from 1.5 to 2.5 mm thick test specimens press cured at 175°C for 10 minutes and post cured 30 minutes at 175°C in a hot air oven, followed by aging for 24 hours at ambient conditions of 23°C and 50% relative humidity. Data reported are the median value of 3 specimens. Stress at elongations of 25%, 50%, 100%, and 200% are listed as M25, M50, M100, and M200, respectively. The rupture properties of tensile strength and elongation are indicated as Tb and Eb, (tensile at break and elongation at break, respectively). Test temperature is 23°C + 2°C.

Shore A hardness: measured using 6mm thick samples composed of 2mm thick plies, cured and post cured as described for tensile properties, aged for 24 hours at ambient conditions of 23°C and 50% relative humidity, per ASTM D2240-05 test method, using a type 2 operating stand. The median value of 5 readings is reported.

Heat aging: Tensile specimens, prepared as described above are hung in a hot air oven for the specified time and temperature. The specimens are conditioned at ambient conditions of 23°C and 50% RH for at least 24 hours before tensile properties are measured.

Inherent viscosity of polyamides: Measured in accordance with ASTM D2857-95, using 96% by weight sulfuric acid as a solvent at a test temperature of 25°C. Samples were dried for 12 hours in a vacuum oven at 80°C prior to testing.

Melting peak temperature: Measured in accordance with ASTM D3418-08.

### Example 1

Polyamide-filled EVA copolymer blends B1-B8 were prepared by mixing an EVA copolymer (A1, A2 or A3) with polyamide (P1, P2, or P3) in the ratios shown in Table 1. The polyamide-filled EVA copolymer blends were prepared as follows. The EVA copolymer and polyamide polymers were charged to a Haake Rheocord^{®} mixing bowl equipped with roller blades, operated at a set temperature of 20°C greater than the melting peak temperature of the polyamide and at about 30 rpm rotor speed. Once the mixing bowl was fully charged, the rotor speed was increased to 100 rpm. Polymer blend melt temperature was monitored, and when the polymer blend temperature reached the melting peak temperature of the polyamide component, a timer was started. At the same time, the set point for the bowl temperature was lowered to match the melting peak temperature of the polyamide, and air cooling of the bowl was initiated. After three minutes of mixing, the rotors were stopped, at which point the temperature of the polymer blend was in the range of 20°C to 35°C greater than the melting peak temperature of the polyamide. The polyamide-filled EVA copolymer blend was then removed from the bowl and cooled to room temperature (about 25°C) before further processing.

**Table 1**

| Blend | B1 | B2 | B3 | B4 | B5 | B6 | B7 | B8 |
|---|---|---|---|---|---|---|---|---|
| | % | % | | | % | % | % | % |
| A1 | 70 | | 70 | | | | | |
| A2 | | 70 | | | 60 | 50 | 40 | 60 |
| A3 | | | | 70 | | | | |
| P1 | 30 | 30 | | 30 | 40 | 50 | 60 | |
| P2 | | | | | | | | 40 |
| P3 | | | 30 | | | | | |

| Blend | B1 | B2 | B3 | B4 | B5 | B6 | B7 | B8 |
|---|---|---|---|---|---|---|---|---|
| | % | % | | | % | % | % | % |
| Mooney viscosity | 40 | 53 | 41 | 32 | 65 | 84 | * | * |
| *not measurable | | | | | | | | |

Mooney viscosity measurements for Blends B7 and B8 could not be measured, indicating that the polyamide component formed a continuous phase in the blend. Blends B1, B2, and B3, however, were further compounded by roll mill mixing at ambient temperature to produce curable compositions E1, E2, and E3 as shown in Table 2. Comparative compositions CE1 and CE2 use the same EVA copolymers and coagent, peroxide, and antioxidant, but rely on carbon black for reinforcement instead of a dispersion of polyamide.

All five curable compositions exhibit good cure response, and similar Shore A hardness, tensile properties, and compression set after press cure and post cure. After one week heat aging at 190°C, however, the comparative compositions have become hard and brittle. No meaningful tensile strength or elongation data could be obtained on testing these comparative compositions, and they exhibited an increase in Shore A hardness ranging from 18 to 21 points. Compositions E1-E3, on the other hand, exhibited elongation at break of 140 to 150%, and a slight decrease in Shore A hardness of 4 points.

**Table 2**

| Compounds | | CE1 | CE2 | E1 | | | E2 | | E3 |
|---|---|---|---|---|---|---|---|---|---|
| | | phr | phr | phr | | | phr | | phr |
| | A1 | 100 | | | | | | | |
| | A2 | | 100 | | | | | | |
| | B1 | | | 142.9 | | | | | |
| | B2 | | | | | | 142.9 | | |
| | B3 | | | | | | | | 142.9 |
| | Coagent | 2 | 2 | 2 | | | 2 | | 2 |
| | Peroxide | 5 | 5 | 5 | | | 5 | | 5 |
| | Antioxidant | 1 | 1 | 1 | | | 1 | | 1 |
| | Carbon black | 30 | 30 | | | | | | |

| **Cure response** | | | | | | | | | |
|---|---|---|---|---|---|---|---|---|---|
| | ML (dN-m) | 0.3 | 0.3 | 0.3 | | | 0.5 | | 0.4 |
| | MH (dN-m) | 9.8 | 14.2 | 11.5 | | | 14.9 | | 16.2 |

| **Tensile properties and Shore A hardness after press cure 10 min/175°C and post cure 30 minutes/175°C** | | | | | | | | | |
|---|---|---|---|---|---|---|---|---|---|
| | Shore A | 63 | 59 | | 63 | | | 61 | 62 |
| | Tb (MPa) | 16 | 10 | | 10.7 | | | 14.2 | 9.6 |
| | Eb (%) | 170 | 190 | | 160 | | | 230 | 140 |

| **Tensile properties and Shore A hardness after press cure, post cure, and 1 week hot air aging at 190°C** | | | | | | | | | |
|---|---|---|---|---|---|---|---|---|---|
| | Shore A | 81 | 80 | | | 59 | | 57 | 59 |
| | Tb (MPa) | * | * | | | 6.3 | | 6.8 | 4.7 |
| | Eb (%) | * | * | | | 150 | | 140 | 95 |
| * too brittle to test | | | | | | | | | |

| **Compression set 150°C/70 hours** | | | | | | | | | |
|---|---|---|---|---|---|---|---|---|---|
| | (%) | 13 | 12 | 13 | | 10 | | 11 | |

### Example 2

The following example demonstrates the use of compatibilizers for EVA copolymer and polyamide. Polyamide-filled EVA copolymers B9 - B12 were mixed in a Haake Rheocord^{®} mixing bowl according to the method of Example 1 to produce the compositions shown in Table 3.

**Table 3**

| Blend | B9 | B10 | B11 | B12 |
|---|---|---|---|---|
| | % | % | % | % |
| A1 | 67 | 60 | 67 | 60 |
| C1 | 3 | 10 | | |
| C2 | | | 3 | 10 |
| P1 | 30 | 30 | 30 | 30 |
| | Mooney Viscosity | | | |
| | 36 | 36 | 42 | 48 |

B9 - B12 were further compounded by roll mill mixing to produce curable compositions E4 - E7 as shown in Table 4. All compounds in Table 4 exhibit good cure response, and further were press cured and post cured to form samples for tensile testing. In comparison to E1 (lacking compatibilizer), E4 - E8 exhibit slightly improved tensile strength and elongation to break both before and after heat aging.

**Table 4**

| Compounds | E4 | E5 | E6 | E7 |
|---|---|---|---|---|
| | Phr | Phr | phr | phr |
| B8 | 142.9 | | | |
| B9 | | 142.9 | | |
| B10 | | | 142.9 | |
| B11 | | | | 142.9 |
| Coagent | 2 | 2 | 2 | 2 |
| Peroxide | 5 | 5 | 5 | 5 |
| Antioxidant | 1 | 1 | 1 | 1 |
| | | | | |

| **Cure Response** | | | | |
|---|---|---|---|---|
| ML (dN-m) | 0.4 | 0.4 | 0.4 | 0.5 |
| MH (dN-m) | 11.8 | 11.4 | 12.4 | 13.4 |
| | | | | |

| **Tensile properties and Shore A hardness after press cure 10 min/175°C and post cure 30 minutes/175°C** | | | | |
|---|---|---|---|---|
| Shore A | 60 | 60 | 63 | 67 |
| Tb (MPa) | 13.5 | 13.4 | 10.7 | 11.3 |
| Eb (%) | 200 | 215 | 200 | 210 |

| **Tensile properties and Shore A hardness after press cure, post cure, and 1 week hot air aging at 190°C** | | | | |
|---|---|---|---|---|
| Shore A | 56 | 57 | 59 | 62 |
| Tb (MPa) | 9.1 | 9.4 | 6.6 | 6.8 |
| Eb (%) | 180 | 185 | 175 | 165 |

### Example 3

The following example demonstrates the addition of conventional carbon black filler to the polyamide-filled EVA compositions. Polyamide-filled EVA copolymers B13-B15 were produced according to the method of Example 1 to form the compositions in Table 5.

**Table 5**

| Blend | B13 | B14 | B15 |
|---|---|---|---|
| | % | % | % |
| A2 | 80 | 90 | 60 |
| P1 | 20 | 10 | |
| P4 | | | 40 |

| **Mooney Viscosity** | | | |
|---|---|---|---|
| | 40 | 35 | 77 |

Blends B13 - B15 were then used to produce curable compositions E8-E11 by roll mill mixing, according to the formulations shown in Table 6. E8 and E10 comprise 20wt% polyamide based on the total amount of EVA and polyamide in the compound, and a relatively low level of conventional carbon black reinforcement (9phr). E9 and E10 comprise less polyamide (10wt%) and more carbon black (27phr). Comparative examples CE4 - CE6 contain 0 to 27phr carbon black, and no polyamide.

**Table 6**

| Compounds | E8 | E9 | E10 | E11 | CE4 | CE5 | CE6 |
|---|---|---|---|---|---|---|---|
| | phr | phr | phr | phr | phr | phr | phr |
| B13 | 125 | | | | | | |
| B14 | | 111.11 | | | | | |
| B15 | | | 62.5 | 27.78 | | | |
| A2 | | | 62.5 | 83.34 | 100 | 100 | 100 |
| Coagent | 2 | 2 | 2 | 2 | 2 | 2 | 2 |
| Peroxide | 5 | 5 | 5 | 5 | 5 | 5 | 5 |
| Antioxidant | 1 | 1 | 1 | 1 | 1 | 1 | 1 |
| Carbon Black | 9 | 27 | 9 | 27 | | 9 | 27 |
| | | | | | | | |

| **Polyamide content (%) based on EVA and polyamide** | | | | | | | |
|---|---|---|---|---|---|---|---|
| | 20 | 10 | 20 | 10 | 0 | 0 | 0 |

| **Cure Response** | | | | | | | |
|---|---|---|---|---|---|---|---|
| ML (dN-m) | 0.6 | 0.4 | 0.3 | 0.3 | 0.2 | 0.2 | 0.3 |
| MH (dN-m) | 16.4 | 12.4 | 10.1 | 8.2 | 7.4 | 7.9 | 11.5 |

| **Polyamide content (%) based on EVA and polyamide** | | | | | | | |
|---|---|---|---|---|---|---|---|
| | | | | | | | |

| **Tensile properties and Shore A hardness after press cure 10 min/175°C and post cure 30 minutes/ 175°C** | | | | | | | |
|---|---|---|---|---|---|---|---|
| | | | | | | | |
| Shore A | 53 | 59 | 56 | 60 | 40 | 46 | 58 |
| Tb (MPa) | 12.3 | 15.3 | 14.3 | 17.3 | 1.7 | 5.2 | 15.2 |
| Eb (%) | 205 | 205 | 180 | 220 | 200 | 240 | 245 |
| | | | | | | | |

| **Shore A hardness increase attributable to carbon black content** | | | | | | | |
|---|---|---|---|---|---|---|---|
| | 6 | 18 | 6 | 18 | 0 | 6 | 18 |

| **Tensile properties and Shore A hardness after press cure, post cure, and 1 week hot air aging at 190°C** | | | | | | | |
|---|---|---|---|---|---|---|---|
| | | | | | | | |
| Shore A | 48 | 62 | 52 | 62 | 79 | 65 | 78 |
| Tb (MPa) | 8.3 | 8.1 | 8.3 | 8.8 | * | 5.2 | 7 |
| Eb (%) | 185 | 135 | 150 | 145 | * | 5 | 20 |
| | | | | | *too brittle to test | | |

By subtracting the Shore A hardness of the unfilled compound CE4 from the Shore A hardness of CE5 or CE6, the hardness increase resulting from 9phr carbon black is determined to be 6 points Shore A, and similarly the hardness increase for 27phr carbon black is found to be 18 points. Therefore, compounds E8 - E11 derive less than 20 points Shore A from reinforcement due to the carbon black in the compound. E8 - E11 exhibit excellent resistance to hot air aging, far superior to the comparative examples CE4 - CE6.

### Example 4

The following example demonstrates the addition of conventional silica filler to the polyamide-filled EVA compositions. The polyamide-filled EVA copolymer composition B16 comprising 30wt% polyamide P4 as shown in Table 7 was produced according to the method of Example 1.

**Table 7**

| Blend | B16 |
|---|---|
| | % |
| A1 | 70 |
| P4 | 30 |
| | |
| Mooney Viscosity | 39 |

B16 was then further diluted by roll mill mixing with EVA resin A1, producing blends B17 - B19, in which the P4 content ranges from 20wt% to 5wt%. The roll mill mixing was conducted at a temperature of 40°C.

**Table 8**

| Blend | B17 | B18 | B19 |
|---|---|---|---|
| | phr | phr | phr |
| B16 | 83.33 | 37.04 | 17.54 |
| A1 | 41.67 | 74.07 | 87.72 |
| | | | |
| Polyamide content (%) | 20 | 10 | 5 |
| | | | |
| Mooney Viscosity | 29 | 23 | 21 |

Blends B16 throughB19 and EVA copolymer A1 were compounded by roll mill mixing to form curable compositions E12-E14 and CE7-CE11 according to the formulations in Table 9. Curable composition E12 relies solely on polyamide for reinforcement, while E13, E14, and CE7 use increasing levels of silica and decreasing levels of polyamide to maintain relatively constant Shore A hardness after press cure and post cure. Comparative compositions CE8-CE11 comprise 0-36phr silica filler and no polyamide, so that the hardness increase attributable to the presence of silica filler can be determined.

After heat aging one week at 190°C, compounds comprising at least 5wt% polyamide and deriving less than 20 points Shore A hardness from silica filler exhibit greater than 100% elongation to break, whereas the compounds lacking polyamide or deriving more than 20 points Shore A hardness from silica filler exhibit elongations of 35% or less under these conditions.

**Table 9**

| Compound | E12 | E13 | E14 | CE7 | CE8 | CE9 | CE10 | CE11 |
|---|---|---|---|---|---|---|---|---|
| | phr | Phr | phr | phr | phr | phr | phr | phr |
| B16 | 142.86 | | | | | | | |
| B17 | | 125 | | | | | | |
| B18 | | | 111.11 | | | | | |
| B19 | | | | 105.26 | | | | |
| A1 | | | | | 100 | 100 | 100 | 100 |
| Peroxide | 7 | 7 | 7 | 7 | 7 | 7 | 7 | 7 |
| Coagent | 2 | 2 | 2 | 2 | 2 | 2 | 2 | 2 |
| Antioxidant | 1 | 1 | 1 | 1 | 1 | 1 | 1 | 1 |
| Silica | | 12 | 24 | 36 | 12 | 24 | 36 | |
| | | | | | | | | |

| **Polyamide content (%) based on EVA and polyamide** | | | | | | | | |
|---|---|---|---|---|---|---|---|---|
| | 30 | 20 | 10 | 5 | 0 | 0 | 0 | 0 |

| **Cure Response** | | | | | | | | |
|---|---|---|---|---|---|---|---|---|
| ML (dN-m) | 0.4 | 0.3 | 0.7 | 1.7 | 0.2 | 0.5 | 1.9 | 0.1 |
| MH (dN-m) | 14.7 | 13.7 | 17.4 | 28.2 | 9 | 14.4 | 27.8 | 6.6 |
| | | | | | | | | |

| **Tensile properties and Shore A hardness after press cure and post cure and post cure 30 minutes/175°C** | | | | | | | | |
|---|---|---|---|---|---|---|---|---|
| Shore A | 62 | 60 | 64 | 67 | 47 | 60 | 66 | 41 |
| Tb (MPa) | 10.9 | 11.1 | 12.1 | 14.7 | 2.8 | 9.4 | 14.2 | 2 |
| Eb (%) | 165 | 210 | 270 | 300 | 175 | 290 | 325 | 210 |

| **Tensile properties and Shore A hardness after press cure and post cure and post cure 30 minutes/175°C** | | | | | | | | |
|---|---|---|---|---|---|---|---|---|
| | | | | | | | | |

| **Shore A hardness increase attributable to silica content** | | | | | | | | |
|---|---|---|---|---|---|---|---|---|
| | 0 | 6 | 19 | 25 | 6 | 19 | 25 | 0 |

| **Tensile properties and Shore A hardness after press cure,post cure, and 1 week hot air aging at 190°C** | | | | | | | | |
|---|---|---|---|---|---|---|---|---|
| Shore A | 59 | 61 | 70 | 76 | 53 | 74 | 84 | 38 |
| Tb (MPa) | 6.1 | 5.3 | 6.8 | 4.5 | 1.5 | 1.4 | 2 | * |
| Eb (%) | 120 | 115 | 105 | 35 | 15 | 5 | 10 | * |
| | | | | | | | *too brittle to test | |

### Example 5

This example demonstrates the use of a twin screw extruder to produce a polyamide-filled EVA copolymer as shown in Table 10 with a high content of polyamide that is further processed to produce a curable compound and heat resistant article. Polyamide P1 was metered by weight loss feeder into the first barrel section of a 28mm Berstorff^{®} co-rotating twin screw extruder with nine barrel sections, operating at a screw speed of 150 rpm. At the same time, EVA copolymer A2 was metered into the fourth section of the extruder via a specially configured extruder. Melt temperature of the polyamide/EVA copolymer blend reached about 250°C. After exiting the die, the resultant polyamide-filled EVA copolymer was cast onto a chilled belt and cooled to 25°C before further processing.

**Table 10**

| Blend | B20 |
|---|---|
| | % |
| A2 | 43.3 |
| P1 | 56.7 |
| | |
| Moonev viscosity | 74 |

The results in Table 10 show that even with a polyamide content of 56.7%, B20 has a Mooney viscosity of 74, and therefore could be further processed at a temperature less than the melting peak temperature of the polyamide to produce the curable compound E15 as shown in Table 11.

**Table 11**

| Compound | E15 |
|---|---|
| | phr |
| B20 | 176.37 |
| Coagent | 2 |
| Peroxide | 5 |
| Antioxidant | 1 |
| | |

| **Cure Response** | |
|---|---|
| ML (dN-m) | 1.3 |
| MH (dN-m) | 27.9 |
| | |

| Tensile properties and Shore A hardness after press cure 10 min/175°C and post cure 30 minutes/175°C | |
|---|---|
| Shore A | 80 |
| Tb (MPa) | 17.7 |
| Eb (%) | 15 |
| | |

| Tensile properties and Shore A hardness after press cure, post cure, and 1 week hot air aging at 190°C | |
|---|---|
| Shore A | 59 |
| Tb (MPa) | 4.7 |
| Eb (%) | 95 |

Also disclosed herein are processes for producing the heat resistant curable ethylene vinyl acetate (EVA) copolymer - polyamide blend composition.

Another disclosure herein are articles prepared from the heat resistant curable ethylene vinyl acetate (EVA) copolymer - polyamide blend composition, and a process for making them.

### DETAILED DESCRIPTION OF THE INVENTION

The present invention is directed to a curable blend composition comprising ethylene vinyl acetate (EVA) copolymer and polyamide and a peroxide curative that, exhibits enhanced resistance to physical property loss during hot air aging. The invention is also directed to processes for preparation of the curable EVA copolymer - polyamide blend compositions, and processes for preparation of cured thermoset articles from the curable EVA copolymer - polyamide blend compositions.

It has been found that when low levels of polyamide polymers are dispersed in EVA copolymers, the resultant compositions, when cured, exhibit surprising improvements in physical properties. That is, the curing process, which is also commonly referred to as crosslinking or vulcanization, converts the EVA copolymer - polyamide blend composition to an EVA composition that exhibits enhanced hot air aging resistance compared to EVA compositions lacking polyamide. Depending on the vinyl acetate content, the neat EVA copolymer may be amorphous or may exhibit a melting peak temperature up to about 100°C. A benefit of the present invention is that the polyamide content in the curable EVA-polyamide blend is sufficiently low that the polyamide does not contribute significantly to the modulus or hardness of the cured article. Therefore, the polyamide can be incorporated into existing formulations for curable EVA compounds to improve hot air aging without altering other properties of the cured article.

One embodiment disclosed herein is a curable EVA copolymer composition that comprises a polymer blend of an EVA copolymer, polyamide, which together is referred to as an EVA copolymer-polyamide blend, and a curative, usually a peroxide curative. The EVA copolymer-polyamide blend composition is characterized as comprising from 0.1 to 10 weight percent polyamide based on the combined total amount of EVA copolymer and polyamide in the blend. The EVA copolymer component of the blend comprises one or more EVA copolymers, each exhibiting a melting peak temperature of 100°C or less as determined by ASTM D3418-08, or an EVA component that is amorphous, or a combination of these.

The EVA copolymers useful in the practice of the invention described herein comprise copolymerized units of ethylene and vinyl acetate monomers. Other comonomers may optionally be present, including alkyl esters or alkoxyalkyl esters of propenoic acid, carbon monoxide, alpha-olefins such as propene, 1-butene, or 1-hexene. or comonomers that provide epoxide, anhydride, or acid functionality in the EVA polymer, for example glycidyl methacrylate, maleic anhydride and its half esters, or (meth)acrylic acid. Because the blend compositions of the present invention comprise low levels of polyamide, comonomers in the EVA copolymer that provide acid, epoxide, or anhydride functionality are generally not needed to compatibilize the EVA copolymer and polyamide components. Preferably, comonomers comprising acid, epoxide, or anhydride moieties are absent from the EVA copolymer.

The concentration of vinyl acetate comonomer present in these EVA copolymers is not particularly limiting, provided the melting peak temperature of the EVA copolymer is less than about 100°C. Typically, EVA copolymers comprising from 18% to 90% by weight vinyl acetate based on the weight of the EVA may be used to prepare curable EVA-polyamide blends of the invention. Examples of useful EVA copolymers include Elvax^{®} resin grades such as 40L03, 265, and 460 available from E. I. du Pont de Nemours and Company, Wilmington, Delaware, USA and Levapren^{®} grades 400 through 900, available from Lanxess Corp. In some embodiments, the EVA copolymers are amorphous polymers, rather than semi-crystalline thermoplastics. For the present invention, an EVA copolymer is considered to be amorphous if it exhibits no first order thermal transition when tested in accordance with ASTM D3418-08. An amorphous EVA copolymer therefore does not possess a melting peak temperature.

The EVA copolymers that are used to prepare the curable EVA-polyamide blend compositions of the invention are substantially uncured. By substantially uncured is meant that the unblended EVA copolymer has a sufficiently low viscosity to be shaped into a finished article by molding or extrusion. Preferably, the Mooney viscosity determined according to ASTM D1646, ML 1+4 at 100°C of the EVA copolymer component is less than 120, more preferably less than 80 and most preferably less than 40. By curable is meant that the composition intended for production of a molded or extruded article (i.e. the composition that includes EVA copolymer, polyamide, peroxide and optionally fillers, coagents, process aids, plasticizers, pigments, release aids, and other conventional ingredients found in curable EVA compounds) exhibits an increase in torque (MH-ML) when tested in a rotorless cure meter per ASTM D5289-07a at conditions of 177°C for 24 minutes of at least 2.5 dN-m, more preferably at least 4 dN-m, and most preferably more than 5.5 dN-m.

The polymer blend composition comprises one or more polyamides. Preferably, the polyamides have a melting peak temperature of at less than 270°C as determined in accordance with ASTM D3418-08. Because the polyamide in the inventive compositions is present at low levels of from 0.1wt% to 10wt%, there is no requirement that the polyamide remain solid (unmelted) at the curing temperature of the curable composition. Polyamide resins are well known in the art and embrace those semi-crystalline resins having a weight average molecular weight of at least 5,000 and include those compositions commonly referred to as nylons. Thus, the polyamide component useful in the practice of the invention includes polyamides and polyamide resins, or combinations or mixtures of these, such as nylon 6, nylon 7, nylon 6/6, nylon 6/10, nylon 6/12, nylon 11, nylon 12, polyamides comprising aromatic monomers, polyamide block elastomers, such as copoly(amide-ether) or copoly(amide-ester), and polyamide multipolymers made from a mixture of polyamide forming monomers such that the polyamide comprises a mixture of at least two types of polyamide structural units. The resins may be in any physical form, such as pellets and particles of any shape or size, including nanoparticles.

The polyamide resin can be produced by condensation polymerization of equimolar amounts of a saturated dicarboxylic acid containing from 4 to 12 carbon atoms with a diamine, which diamine contains from 4 to 14 carbon atoms. The polyamide may also be prepared by a ring opening polymerization reaction such as nylon 6, or by condensation of aminocarboxylic acids such as nylon 7 or 11.

Examples of polyamides include polyhexamethylene adipamide (66 nylon), polyhexamethylene azelaamide (69 nylon), polyhexamethylene sebacamide (610 nylon) and polyhexamethylene dodecanoamide (612 nylon), the polyamide produced by ring opening of lactams, i.e. polycaprolactam, polylauriclactam, poly-11-aminoundecanoic acid, and bis(p-aminocyclohexyl)methanedodecanoamide. It is also possible to use polyamides prepared by the polymerization of two of the above polymers or terpolymerization of the above polymers or their components, e.g. an adipic acid isophthalic acid hexamethylene diamine elastomer.

Typically, polyamides are condensation products of one or more dicarboxylic acids and one or more diamines, and/or one or more aminocarboxylic acids, and/or ring-opening polymerization products of one or more cyclic lactams. Polyamides may be fully aliphatic or semi-aromatic.

Fully aliphatic polyamides useful in practice of the present invention are formed from aliphatic and alicyclic monomers such as diamines, dicarboxylic acids, lactams, aminocarboxylic acids, and their reactive equivalents. A suitable aminocarboxylic acid is 11-aminododecanoic acid. Suitable lactams are caprolactam and laurolactam. In the context of this invention, the term "fully aliphatic polyamide" also refers to elastomers derived from two or more such monomers and blends of two or more fully aliphatic polyamides. Linear, branched, and cyclic monomers may be used.

Carboxylic acid monomers comprised in the fully aliphatic polyamides include, but are not limited to aliphatic carboxylic acids, such as for example adipic acid, pimelic acid, suberic acid, azelaic acid, decanedioic acid, dodecanedioic acid, tridecanedioic acid, tetradecanedioic acid, and pentadecanedioic acid. Diamines can be chosen from diamines having four or more carbon atoms, including, but not limited to tetramethylene diamine, hexamethylene diamine, octamethylene diamine, decamethylene diamine, dodecamethylene diamine, 2-methylpentamethylene diamine, 2-ethyltetramethylene diamine, 2-methyloctamethylenediamine; trimethylhexamethylenediamine, meta-xylylene diamine, and/or mixtures thereof.

Semi-aromatic polyamides are also suitable for use in the present invention. Such polyamides are homopolymers, dipolymers, terpolymers or higher order polymers formed from monomers containing aromatic groups. One or more aromatic carboxylic acids may be terephthalic acid or a mixture of terephthalic acid with one or more other carboxylic acids, such as isophthalic acid, phthalic acid, 2-methyl terephthalic acid and naphthalic acid. In addition, the one or more aromatic carboxylic acids may be mixed with one or more aliphatic dicarboxylic acids. Alternatively, an aromatic diamine such as meta-xylylene diamine can be used to provide a semi-aromatic polyamide, an example of which is a homopolymer comprising meta-xylylene diamine and adipic acid.

Block copoly(amide) elastomers are also suitable for use as the polyamide component. If a low softening point material comprises the block copoly(amide) elastomer, e.g., a polyether oligomer or a polyalkylene ether, for example, poly(ethylene oxide), then the block polymer will be a copoly(amide-ether). If a low softening point material of the block copoly(amide) elastomer comprises an ester, for example, a polylactone such as polycaprolactone, then the block elastomer will be a copoly(amide-ester). Any such low softening point materials may be used to form a block copoly(amide) elastomer. Optionally, the lower softening point material of the block copoly(amide) elastomer may comprise a mixture, for example, a mixture of any of the above-mentioned lower softening point materials. Furthermore, said mixtures of lower softening point materials may be present in a random or block arrangement, or as mixtures thereof. Preferably, the block copoly(amide) elastomer is a block copoly(amide-ester), a block copoly(amide-ether), or mixtures thereof. More preferably, the block copoly(amide) elastomer is at least one block copoly(amide-ether) or mixtures thereof. Suitable commercially available thermoplastic copoly(amide-ethers) include PEBAX^{®} polyether block amides from Elf-Atochem, which includes PEBAX^{®} 4033 and 6333. Most preferably, the polyamide is other than a block copoly(amide-ether) or copoly(amide-ester). Other polyamides are generally more effective in stabilizing the EVA copolymer. Poly(amide-ethers) also exhibit poorer hot air aging as compared to conventional polyamides lacking a polyether block.

Preferred polyamides are homopolymers or copolymers wherein the term copolymer refers to polyamides that have two or more amide and/or diamide molecular repeat units.

The polyamide component may comprise one or more polyamides selected from Group I polyamides having a melting peak temperature of at least 160°C, but less than 210°C, and comprising an aliphatic or semiaromatic polyamide, for example poly(pentamethylene decanediamide), poly(pentamethylene dodecanediamide), poly(ε-caprolactam/hexamethylene hexanediamide), poly(ε-caprolactam/hexamethylene decanediamide), poly(12-aminododecanamide), poly(12-aminododecanamide/tetramethylene terephthalamide), and poly(dodecamethylene dodecanediamide); Group (II) polyamides having a melting peak temperature of at least 210°C, and comprising an aliphatic polyamide selected from the group consisting of poly(tetramethylene hexanediamide), poly(ε-caprolactam), poly(hexamethylene hexanediamide), poly(hexamethylene dodecanediamide), and poly(hexamethylene tetradecanediamide); Group (III) polyamides having a melting peak temperature of at least 210°C, and comprising 20 to 35 mole percent semiaromatic repeat units derived from monomers selected from one or more of the group consisting of (i) aromatic dicarboxylic acids having 8 to 20 carbon atoms and aliphatic diamines having 4 to 20 carbon atoms; and 65 to 80 mole percent aliphatic repeat units derived from monomers selected from one or more of the group consisting of an aliphatic dicarboxylic acid having 6 to 20 carbon atoms and said aliphatic diamine having 4 to 20 carbon atoms; and a lactam and/or aminocarboxylic acid having 4 to 20 carbon atoms; Group (IV) polyamides comprising 50 to 95 mole percent semi-aromatic repeat units derived from monomers selected from one or more of the group consisting of aromatic dicarboxylic acids having 8 to 20 carbon atoms and aliphatic diamines having 4 to 20 carbon atoms; and 5 to 50 mole percent aliphatic repeat units derived from monomers selected from one or more of the group consisting of an aliphatic dicarboxylic acid having 6 to 20 carbon atoms and said aliphatic diamine having 4 to 20 carbon atoms; and a lactam and/or aminocarboxylic acid having 4 to 20 carbon atoms; Group (V) polyamides having a melting peak temperature of at least about 260°C, comprising greater than 95 mole percent semi-aromatic repeat units derived from monomers selected from one or more of the group consisting of aromatic dicarboxylic acids having 8 to 20 carbon atoms and aliphatic diamines having 4 to 20 carbon atoms; and less than 5 mole percent aliphatic repeat units derived from monomers selected from one or more of the group consisting of an aliphatic dicarboxylic acid having 6 to 20 carbon atoms and said aliphatic diamine having 4 to 20 carbon atoms; and a lactam and/or aminocarboxylic acid having 4 to 20 carbon atoms. The polyamide may also be a blend of two or more polyamides.

Nylon multipolymers are also suitable for use in the present invention. These multipolymers combine structural units of various nylon types such as 6, 6/6, 6/10, 6/12, etc., within a polymer molecule to form polyamides having a peak melting temperature typically less than 160°C. In certain instances, the low melting peak temperature of the nylon multipolymer enables melt mixing the EVA copolymer, nylon multipolymer, and peroxide in a single pass.

Preferred polyamides include nylon 6, 6/10, 10/10, 11, 6/12, 12, 6/6, Group (IV) polyamides having a melting peak temperature less than 270°C, and nylon multipolymers. These polyamides have a melting peak temperature sufficiently low so as not to cause significant degradation of the blends during production.

Polyamides suitable for use in the invention are widely commercially available, for example Zytel^{®} and Elvamide^{®} resins, available from E. I. du Pont de Nemours and Company, Wilmington, Delaware, USA, Durethan^{®} resins, available from Lanxess, Germany, and Ultramid^{®} resins available from BASF, USA.

In the present invention, the EVA copolymer-polyamide blend comprises (i) from 99.9 weight percent to 90 weight percent of one or more of EVA copolymer component described herein and (ii) from 0.1 to 10 weight percent of one or more polyamide described herein, wherein each of (i) and (ii) are based on the combined total weight of the EVA copolymer and polyamide components. The EVA copolymer component may be made up of one or more than one EVA copolymer of the type described herein as being suitable for use in the practice of the invention. Similarly, the polyamide component may be made up of one or more than one polyamide of the type described herein as being suitable for use in the practice of the invention. Preferably, the curable compositions will comprise from 99.5 to 90 weight percent EVA copolymer component and from 0.5 to 10 weight percent polyamide component, based on the total weight of the EVA copolymer and polyamide components. More preferably, the curable compositions will comprise from 99 to 95 weight percent EVA copolymer component and from 1 to 5 weight percent polyamide component based on the total weight of the EVA copolymer and polyamide components. These ratios provide sufficient polyamide such that a cured article made from the curable EVA-polyamide blend exhibits good resistance to hot air aging, but the presence of the polyamide does not significantly increase the hardness and/or modulus of the cured article compared to an otherwise identical EVA compound lacking polyamide.

The curable EVA copolymer compositions described herein also comprise a peroxide curative. Suitable peroxide curatives, also known as peroxide curing systems, comprise a peroxide and optionally a coagent. Examples of peroxides and coagents include curative systems as generally known in the art, including those described herein, operative at the temperature employed during vulcanization. For example, useful organic peroxides are those that decompose rapidly within the temperature range of 150°C to 220°C. These include, for example, dicumyl peroxide, 2,5-bis(t-butylperoxy)-2,5-dimethylhexane, and α',α'-bis(t-butylperoxy)-diisopropylbenzene (available from Arkema under the tradename Vul-Cup^{®}). In a typical vulcanizate composition the peroxide is present in amounts of from about 0.5 to 5 parts phr (parts per hundred parts rubber, i.e. parts per hundred parts of the one or more EVA polymers present). The peroxide may be adsorbed on an inert carrier such as calcium carbonate, carbon black or kieselguhr; however, the weight of the carrier is not included in the above range. Generally, an optional coagent will be present to increase the state of cure of the finished part. The coagent can be for example, N,N'-(m-phenylene) dimaleimide, trimethylolpropane trimethylacrylate, tetraallyloxyethane, triallyl cyanurate, tetramethylene diacrylate, or polyethylene oxide glycol dimethacrylate. A preferred coagent is N,N'-(m-phenylene) dimaleimide, available from E. I. du Pont de Nemours and Company as HVA-2. The amount of the coagent used is generally about 0 to 5 parts by weight per 100 parts EVA polymer (phr), preferably 1 to 5 parts phr. The coagents usually contain multiple unsaturated groups such as allyl groups or acrylic ester groups. While their mode of action is not known with certainty, it is thought that they react with the initial radical formed on the polymer backbone to form a more stable radical, which undergoes coupling reactions to form crosslinks more readily than chain scission reactions.

The polymer blend component of the curable EVA-polyamide blend compositions may be formed by mixing 0.1 to 10wt% of the one or more polyamides with 90 to 99.9wt% of the EVA copolymer component at a temperature greater than the melting peak temperature of the polyamide component and, if the EVA copolymer component exhibits a melting peak temperature, at a temperature greater than the melting peak temperature of the EVA copolymer component, under conditions that do not produce a dynamic cure of the EVA copolymer. If a curative is present during the mixing process, one skilled in the art can select a temperature that will allow for mixing of the EVA and polyamide without causing a dynamic cure of the blend. By dynamic cure is meant mixing EVA copolymer - polyamide blend in the presence of a curative while simultaneously expending, decomposing, or consuming the curative. Because a dynamic cure leaves little or no longer active curative remaining after the mixing process, the resulting composition will not exhibit a cure response as measured per ASTM D5289-07a using an MDR 2000 from Alpha Technologies operating at 0.5° arc and at test conditions of 177°C for 24 minutes. If the polyamide component exhibits a melting peak temperature of 160°C or greater, then the curative, generally a peroxide curative, will not be present when the polyamide component and the EVA copolymer component are being mixed. This is because temperatures of 160°C or greater tend to cause peroxide decomposition and hence crosslinking and/or gelling of the EVA copolymer. Gelling or crosslinking of the EVA copolymer during mixing with molten polyamide may produce a high viscosity blend that is difficult or impossible to further form into a finished article. In particular, a blend with a gelled or crosslinked EVA component may exhibit a Mooney viscosity (ML 1+4, 100°C) greater than 200, or it may exhibit flow behavior such that the Mooney viscosity cannot be measured. Inability to measure a Mooney viscosity of the blend occurs either because the blend cannot be formed into the Mooney test specimen by conventional rubber processing, or because the test specimen crumbles during the Mooney test.

After mixing the EVA copolymer component and the one or more polyamide wherein the polyamide component exhibits a melting peak temperature of 160°C or greater, the blend is cooled to a temperature less than 160°C, preferably to a temperature less than 140°C, and most preferably to a temperature less than 120°C prior to forming a curable composition of the invention by mixing the blend with peroxide curative. The blend can also be cooled to room temperature.

In general, compositions that result from mixing EVA copolymers and polyamides may comprise a wide range of blend morphologies, ranging from those wherein discrete, discontinuous polyamide particles exist within a continuous EVA copolymer matrix, to compositions wherein high aspect ratio polyamide "fibers" are present, to compositions that comprise co-continuous structures, to compositions comprising discrete EVA copolymer domains within a continuous phase of polyamide. Most of these compositions have morphologies that are unsuitable for use in the present invention, because the blends have very high Mooney viscosities, i.e. Mooney viscosity ML 1+4, 100°C of greater than 200, or exhibit such poor processability at temperatures less than the melting peak temperature of the polyamide that the Mooney viscosity cannot be measured. A Mooney viscosity greater than 200, or the inability to measure Mooney viscosity, indicates that the polyamide comprises a continuous or fibrous phase in the blend. Such blends exhibit poor processability for extrusion or molding, and poor elastic properties after curing if a cured article can successfully be formed. A Mooney viscosity less than 200, preferably less than 150, and most preferably less than 100, is confirmatory of a blend morphology wherein the EVA copolymer comprises a continuous phase, and the polyamide comprises a discontinuous phase. By "discontinuous polyamide phase" is meant that the polyamide is present in the polymer blend compositions of the invention as dispersed particles, or domains surrounded by a continuous EVA copolymer matrix. In general, the polyamide domains in the EVA-polyamide blend compositions of the invention will preferably be completely isolated from each other within the continuous EVA copolymer matrix. However, in certain instances a small percentage, less than about 5%, of localized sites in the polymer blend composition may exist wherein the polyamide domains are aggregated or connected to each other.

In one embodiment of the present invention, curable heat resistant EVA-polyamide blend compositions may be produced in a first step by mixing from 0.1 to 10wt% polyamide component with 90 to 99.9wt% EVA copolymer component wherein the EVA copolymer is amorphous or has a melting peak temperature of less than 100°C, at a temperature greater than the melting peak temperature of the polyamide component and, if the EVA copolymer component exhibits a melting peak temperature, at a temperature greater than the melting peak temperature of the EVA copolymer component, under conditions that do not produce a dynamic cure of the EVA copolymer. The EVA copolymer - polyamide blend from the first step has a Mooney viscosity less than 200, preferably less than 150, and most preferably less than 100, to ensure that the EVA copolymer comprises the continuous phase in the blend and the polyamide comprises a discontinuous phase. If necessary, the blend is cooled to a temperature of less than 160°C. A peroxide curative is added to the blend to form the curable EVA copolymer-polyamide blend composition.

In another embodiment, curable EVA-polyamide blend compositions may be produced in a first step by mixing from 0.1 to 60wt% polyamide component with 40 to 99.9wt% EVA copolymer component wherein the EVA copolymer is amorphous or has a melting peak temperature of less than 100°C, at a temperature greater than the melting peak temperature of the polyamide component and, if the EVA copolymer component exhibits a melting peak temperature, at a temperature greater than the melting peak temperature of the EVA copolymer component, under conditions that do not produce a dynamic cure of the EVA copolymer. The intermediate EVA copolymer - polyamide blend composition from the first step has a Mooney viscosity less than 200, preferably less than 150, and most preferably less than 100, to ensure that the EVA copolymer comprises the continuous phase in the blend and the polyamide comprises a discontinuous phase. In a second step, the intermediate EVA - copolymer polyamide blend composition from the first step is mixed with additional EVA copolymers of the same or different type as used in the mixing process of the first step, provided that the one of more EVA copolymers introduced in the second step have melting peak temperatures less than 100°C, and the resulting EVA copolymer - polyamide blend from the second step comprises 0.1 to 10wt% polyamide and has a Mooney viscosity less than 200. The temperature used for mixing of the second step may be any convenient temperature, either less than or greater than the melting peak temperature of the polyamide component, and if the EVA copolymer exhibits a melting peak temperature, at a temperature either less than or greater than the melting peak temperature of the EVA copolymer component. Preferably, the temperature used for the second mixing step is less than the melting peak temperature of the polyamide. Most preferably, the temperature used for the second mixing step is less than the melting peak temperature of the polyamide, and if the EVA copolymer component exhibits a melting peak temperature, at a temperature greater than the melting peak temperature of the EVA copolymer component. To form a curable composition of the invention, peroxide curative is mixed with the EVA copolymer - polyamide blend of the second step at a temperature less than 160°C. In some embodiments, peroxide curative can be present in the second mixing step, thereby providing a curable EVA copolymer - polyamide composition of the invention without the need for subsequent mixing.

If the polyamide exhibits a melting peak temperature less than 160°C, then under certain conditions, depending on the type of peroxide and the mixing time and temperature, it can be possible to mix the EVA copolymer, polyamide, and peroxide at a temperature greater than the melting peak temperature of the polyamide component and, if the EVA copolymer exhibits a melting peak temperature, at a temperature greater than the melting peak temperature of the EVA copolymer component, in a single pass without premature gelling or crosslinking of the EVA copolymer. Such conditions are known to those skilled in the art, and may easily be determined by comparing the Mooney viscosities (ML 1+4, 100°C) of compounds mixed under similar conditions, wherein the compounds differ only in the presence or absence of a peroxide curative. A Mooney viscosity difference of 10 points or less is confirmatory of a suitable mixing process for single pass mixing with EVA copolymer, polyamide, and peroxide. Alternatively, the EVA copolymer - polyamide blend composition may be cooled to a temperature less than the mixing temperature prior to compounding the blend with peroxide to form a curable composition.

The addition of curative to the EVA copolymer - polyamide blend will desirably take place at a temperature below the decomposition temperature of the peroxide and below the temperature at which the crosslinking reaction occurs. Generally, the addition will take place at a temperature below 140°C, preferably at a temperature no greater than 120°C. The addition of the curative may take place simultaneously with the addition of optional processing ingredients, such as colorants, carbon black or mineral reinforcing agents, antioxidants, processing aids, fillers and plasticizers, or it may be an operation separate from addition of the other ingredients. The addition may be conducted on a two-roll rubber mill or by using internal mixers suitable for compounding gum rubber compositions, including Banbury^{®} internal mixers, Haake Rheocord^{®} mixers, Brabender ^{®} mixers, Farrel Continuous Mixers, or single and twin screw extruders.

After addition of the curatives and other optional ingredients such as fillers, plasticizers, pigments, antioxidants, process aids, etc., to the EVA copolymer-polyamide blend, the resulting compound desirably exhibits a strong cure response as determined in accordance with ASTM D5289-07a using an MDR 2000 from Alpha Technologies operating at 0.5° arc and at test conditions of 177°C for 24 minutes. Preferably, the increase in torque measured in this test is at least 2.5 dN-m, more preferably at least 4 dN-m, and most preferably at least 5.5 dN-m. The increase in torque is the difference MH-ML, where ML refers to the minimum torque value measured and MH refers to the maximum torque value attained after the measurement of ML.

To achieve optimal heat aging resistance, an antioxidant is desirably added to the curable EVA copolymer-polyamide blend composition prior to curing. Useful antioxidants include, but are not limited to, aryl amines, phenolics, imidazoles, and phosphites. Thus, in some embodiments, the antioxidant will be a phosphorus ester antioxidant, a hindered phenolic antioxidant, an amine antioxidant, or a mixture of two or more of these compounds. The proportion of the antioxidant compound in the composition is typically 0.1 to 5 phr, preferably 0.5 to 2.5 phr. The weight ratio of the phenolic or amine antioxidant to the phosphorus compound in the mixtures is 0.5 to 3, and preferably the ratio is about 1.

Examples of aryl amines that may be useful antioxidants include 4,4'-bis(α,α-dimethylbenzyl)diphenylamine, diphenylamine and alkylated diphenylamines, 4-aminodiphenyl amine, and N-phenyl-N'-(p-toluenesulfonyl)-p-phenylenediamine. Examples of phenolic antioxidants include 4,4'-butylenebis(6-t-butyl-m-cresol), 1,3,5-trimethyl-2,4,6-tris-(3,5-di-t-butyl-4-hydroxybenzyl)benzene, and 4,4'-thiobis-(3-methyl-6-t-butylphenol). Examples of phosphite antioxidants include triphenylphosphite, bis(2,4-di-t-butylphenyl)pentraerythritol diphosphite, and tris(2,4-ditert-butylphenyl)phosphite. Examples of imidazole antioxidants include 2-mercaptomethylbenzimidazole, 2-mercaptobenzimidazole, and zinc 4- and -5-methyl-2-mercapto-benzimidazole. Combinations of antioxidants may be used, generally at levels between 0.5 and 5 phr based on 100 parts of the EVA copolymer in the compound.

Suitable hindered phenolic antioxidants can be, for example 4,4'-butylidenebis(6-t-butyl-m-cresol), 1,3,5-trimethyl-2,4,6-tris-(3,5-di-t butyl-4-hydroxybenzyl)benzene, 2,6-di-t-butyl-α-dimethylamino-p-cresol and 4,4'-thiobis-(3-methyl-6-t-butylphenol).

Antioxidants comprising the salt of a strong base and a weak acid, optionally combined with a carbodiimide, as disclosed in EP1081188, may also be used in the EVA copolymer-polyamide blends.

Preferred antioxidant compositions contain tri(mixed mono- and dinonylphenyl) phosphate mixed with either 4,4'-butylidenebis(6-t-butyl-m cresol) or 4,4'-bis(α,α-dimethylbenzyl)diphenylamine. Preferred antioxidant compositions contain 4,4'-bis(α,α-dimethylbenzyl)diphenylamine (available commercially as Naugard^{®} 445 from Chemtura Corp.). Antioxidants may be added while the EVA copolymer is melt mixed with the polyamide, or after the blend has cooled.

The compositions of the invention may also comprise polymers with amine reactive functionality provided that when addition of such polymers occurs at a temperature above the melting peak temperature of the polyamide component the presence of such polymers does not increase the Mooney viscosity (ML 1+4, 100°C), as determined according to ASTM D1646, of the resulting composition to above 200. Ethylene copolymers comprising copolymerized or grafted amine reactive functionality may be useful in improving properties such as tensile strength and elongation of the cured EVA-polyamide blend compositions. To be effective, the amine reactive ethylene copolymer must be present in the blend when the polyamide is molten. Preferably, less than 30 parts of ethylene copolymer comprising copolymerized or grafted amine reactive functionality per 100 parts by weight of the EVA copolymer will be present in the EVA copolymer-polyamide blend, more preferably less than 10 parts, and most preferably zero parts.

In other embodiments, the curable EVA copolymer -polyamide blend compositions of the invention may be blended with another polymer including a polymer containing polyamide, e.g. an elastomer to dilute the polyamide content of the inventive composition by any mixing process, either above or below the melting peak temperature of the polyamide, providing the presence of the additional polymer does not increase the Mooney viscosity (ML 1+4, 100°C) of the resulting composition to above 200. The polymer used for the blending process may be for example, hydrogenated nitrile rubber, polyepichlorohydrin rubber, copolymers of ethylene and alpha-olefins such as propylene, 1- butene, 1-hexene, or 1-octene, fluoroelastomer, and may further comprise fillers, curatives, or other ingredients. Preferably, such dilution occurs at a temperature less than that of the melting peak temperature of the polyamide, and less than the temperature needed to initiate curing.

In addition, the curable EVA copolymer - polyamide compositions may optionally comprise components including plasticizers, process aids, waxes, pigments, and colorants. Such optional components will generally be present in amounts of from 0.1phr to 150phr, based on the weight of the EVA copolymer. The addition of such optional components may take place during preparation of the EVA copolymer-polyamide blend or at the time of mixing of curative with the blend.

Curing or crosslinking (also referred to as vulcanization) of the curable EVA-polyamide blend compositions of the invention typically involves exposing the curable composition, containing any optional ingredients (i.e. a second curable compound) to elevated temperature and elevated pressure for a time sufficient to crosslink the EVA copolymer. Such operations generally are conducted by placing the curable EVA-polyamide blend composition into a mold that is heated in a press (often referred to as press-curing). Alternatively, the curable compositions may be extruded into various shapes. Such extruded shapes or parts are often cured in a pressurized autoclave. After the press cure or autoclave cycle is completed, this initial cure may be followed by an optional post-cure heating cycle at ambient pressure to further cure the EVA copolymer. For example, the vulcanizate may be formed and cured using conventional press cure procedures at 160°C to 220°C for about 2 to 60 minutes. Post-cure heating may be conducted at 160°C to 200°C for several minutes to several hours. Once crosslinked, the compositions described herein are not thermoplastic, but thermoset. Suitable cure conditions will depend on the particular curable compound formulation and are known to those of skill in the art.

In further embodiment, the invention is directed to a process for production of a cured article from an EVA copolymer-polyamide blend composition comprising a first step of providing curable EVA copolymer - polyamide composition as described herein, and heating the curable blend composition to a temperature of at least 160°C for one minute to form a cured article. Forming the article may be done prior to curing or concurrently.

The cured articles prepared from the EVA-polyamide blend compositions described herein exhibit unusually good resistance to embrittlement during heat aging, as evidenced by a reduction in the amount of decrease in tensile elongation at break following heat aging at 175°C for one to two weeks and a reduction in the increase in Shore A hardness as a result of heat aging. For example, inclusion of 2wt% polyamide in a curable EVA compound can decrease the percentage loss of tensile elongation after hot air aging for one week at 175°C by over 70%, and limit the change in Shore A hardness after hot air aging for two weeks at 175°C from about 17 points to 4. This degree of improvement is unusual. Furthermore, these advantages in heat aging are gained with no sacrifice in compression set resistance.

Cured articles of the EVA-polyamide blend compositions prepared by the processes described herein can be used in a wide variety of industrial applications, for production of articles including wire and cable jacketing, spark plug boots, hoses, belts, miscellaneous molded boots, seals and gaskets. Hose applications include turbocharger hoses, transmission oil cooler hoses, power steering hoses, air conditioning hoses, air ducts, fuel line covers, and vent hoses.

Examples of seals include engine head cover gaskets, oil pan gaskets, oil seals, lip seal packings, O-rings, transmission seal gaskets, seal gaskets for a crankshaft or a camshaft, valve stem seals, power steering seals, and belt cover seals.

Automotive tubing applications include axle vent tubing, PCV tubing and other emission control parts. The vulcanizates are also useful for manufacture of crankshaft torsional dampers where high damping over a broad temperature range is needed under high compressive and shear strains. The vulcanizates also can be used to prepare noise management parts such as grommets.

The invention is further illustrated by the following examples wherein all parts are by weight unless otherwise indicated.

### EXAMPLES

### Materials

### EVA copolymers

| | |
|---|---|
| A1 | Copolymer of ethylene and 45 wt% vinyl acetate with a Mooney viscosity (ML 1+4) at 100°C of 19 and a melting peak temperature of 39°C, available from Lanxess Corp. as Levapren^{®} 450 resin. |
| A2 | Copolymer of ethylene and 50 wt% vinyl acetate with a Mooney viscosity (ML 1+4) at 100°C of 25 and a melting peak temperature of 32°C, available from Lanxess Corp. as Levapren^{®} 500 resin. |
| A3 | Copolymer of ethylene and 40 wt% vinyl acetate with a Mooney viscosity (ML 1+4) at 100°C of 17 and a melting peak temperature of 50°C, available from E.I. du Pont de Nemours and Company as Elvax^{®} 40L03 resin. |
| A4 | Copolymer of ethylene and 28 wt% vinyl acetate with a Mooney viscosity of 18 and a melting peak temperature 76°C, available from E.I. du Pont de Nemours and Company as Elvax^{®} 265 resin. |
| A5 | Copolymer of ethylene and 18 wt% vinyl acetate with a Mooney viscosity of 20 and a melting peak temperature of 86°C, available from E.I. du Pont de Nemours and Company as Elvax^{®} 460 resin. |

### Polyamides

| | |
|---|---|
| P1 | Polyamide multipolymer having a melting peak temperature of 115°C, available from E.I. DuPont de Nemours and Company as Elvamide^{®} 8066. |
| P2 | Polyamide multipolymer having a melting peak temperature of 156°C, available from E.I. DuPont de Nemours and Company as Elvamide^{®} 8061. |
| P3 | Polyamide 6/10, having a melting peak temperature of 225°C, available from E.I. DuPont de Nemours and Company as Zytel^{®} 3090. |
| P4 | Polyamide 11 having a melting peak temperature of 182°C, available from Arkema Inc as Rilsan^{®} BESNO TL. |

### Other ingredients

Peroxide: mixture of the para and meta isomers of an α,α'-bis(tert-butylperoxy)-diisopropylbenzene, 40% peroxide active ingredient on kaolin clay carrier, Vulcup^{®} 40KE, available from Arkema Inc.

Coagent: N,N'-(m-phenylene)dimaleimide, HVA-2, available from E.I. du Pont de Nemours and Company.

Carbon black: N550 grade, Sterling^{®} SO carbon black, available from Cabot Corp. Antioxidant: Naugard^{®} 445 antioxidant, available from Chemtura Corp.

### Test Methods

Mooney viscosity: ASTM D1646, ML 1+4, 100°C.

Cure response: Measured per ASTM D5289-07a using an MDR 2000 from Alpha Technologies operating at 0.5° arc. Test conditions of 177°C for 24 minutes. ML refers to the minimum torque value measured during the test, while MH refers to the maximum torque value attained after ML.

Compression set: ISO 815-1:2008, 25% compression, using type B molded buttons prepared using press cure conditions of 175°C for 10 minutes followed by a 30 minute post cure in a hot air oven at 175°C. Time and temperature of the test conditions as specified. Data reported are the median values of 3 specimens.

Tensile properties: ASTM D412-06, die C. Samples cut from 1.5 to 2.5 mm thick test specimens press cured at 175°C for 10 minutes and post cured 30 minutes at 175°C in a hot air oven, followed by aging for 24 hours at ambient conditions of 23°C and 50% relative humidity. Data reported are the median value of 3 specimens. The rupture properties of tensile strength and elongation are indicated as Tb and Eb, (tensile at break and elongation at break, respectively). Test temperature is 23°C + 2°C.

Shore A hardness: measured using 6mm thick samples composed of 2mm thick plies, cured and post cured as described for tensile properties, aged for 24 hours at ambient conditions of 23°C and 50% relative humidity, per ASTM D2240-05 test method, using a type 2 operating stand. The median value of 5 readings is reported.

Heat aging: Tensile specimens, prepared as described above are hung in a hot air oven for the specified time and temperature. The specimens are conditioned at ambient conditions of 23°C and 50% RH for at least 24 hours before tensile properties are measured.

Melting peak temperature: Measured in accordance with ASTM D3418-08.

### Example 1

EVA copolymer-polyamide blends B1-B10 were prepared by mixing EVA copolymer A1 with polyamide (P1 or P2) in the ratios shown in Table 1. The EVA copolymer - polyamide blends were prepared as follows. The EVA and polyamide polymers were charged to a Haake Rheocord^{®} mixing bowl equipped with roller blades, operated at a set temperature indicated in the Table and at a rotor speed of about 30 rpm. Once the mixing bowl was fully charged, the rotor speed was increased to 100 rpm. Polymer batch melt temperature was monitored, and when it reached the set temperature, a timer was started. Cooling was initiated as needed to ensure the temperature of the polymer blend was in the range of 20°C to 35°C greater than the melting peak temperature of the polyamide. After three minutes of mixing, the rotors were stopped. The EVA copolymer - polyamide blend was then removed from the bowl and cooled to room temperature (about 25°C) before further processing.

**Table 1**

| **Blend** | B1 | B2 | B3 | B4 | B5 | B6 | B7 | B8 | B9 | B10 |
|---|---|---|---|---|---|---|---|---|---|---|
| | % | % | % | % | % | % | % | % | % | % |
| A1 | 99.9 | 99.5 | 99.01 | 98.04 | 95.24 | 99.5 | 99.01 | 98.04 | 95.24 | 90.91 |
| P1 | 0.1 | 0.5 | 0.99 | 1.96 | 4.76 | | | | | |
| P2 | | | | | | 0.5 | 0.99 | 1.96 | 4.76 | 9.09 |

| **Mixer set temperature** | | | | | | | | | | |
|---|---|---|---|---|---|---|---|---|---|---|
| deg C | 130 | 130 | 130 | 130 | 130 | 170 | 170 | 170 | 170 | 170 |

| **Mooney Viscosity** | | | | | | | | | | |
|---|---|---|---|---|---|---|---|---|---|---|
| MU | 19 | 19 | 19 | 19 | 21 | 21 | 20 | 21 | 21 | 22 |

As shown in Table 1, blends B1-B10 exhibited Mooney viscosities that differed only slightly from that of the base EVA copolymer A1, demonstrating that up to 9.09% polyamide can be dispersed in EVA copolymer without significantly affecting processability.

EVA copolymer A1 and blends B1-B10 were compounded according to the formulations shown in Table 2 to form curable compounds C1 and E1-E10. Compound C1 is a comparative example and lacks polyamide, while E1-E10 comprise 0.1wt% to 9.09wt% of either polyamide P1 or P2. The curable compounds in Table 2 were mixed using a Brabender Plasti-Corder^{®} equipped with a Prep-Mixer^{®} mixing bowl fitted with cam blades, followed by a final mixing and sheeting on a roll mill at a temperature of about 50°C. In the mixing bowl, the maximum batch temperature was about 100°C.

**Table 2**

| **Curable** | C1 | E1 | E2 | E3 | E4 | E5 | E6 | E7 | E8 | E9 | E10 |
|---|---|---|---|---|---|---|---|---|---|---|---|
| **Compound** | phr | phr | phr | phr | phr | phr | phr | phr | phr | phr | phr |
| A1 | 100 | | | | | | | | | | |
| B1 | | 100.1 | | | | | | | | | |
| B2 | | | 100.5 | | | | | | | | |
| B3 | | | | 101 | | | | | | | |
| B4 | | | | | 102 | | | | | | |
| B5 | | | | | | 105 | | | | | |
| B6 | | | | | | | 100.5 | | | | |
| B7 | | | | | | | | 101 | | | |
| B8 | | | | | | | | | 102 | | |
| B9 | | | | | | | | | | 105 | |
| B10 | | | | | | | | | | | 110 |
| Peroxide | 5 | 5 | 5 | 5 | 5 | 5 | 5 | 5 | 5 | 5 | 5 |
| Coagent | 2 | 2 | 2 | 2 | 2 | 2 | 2 | 2 | 2 | 2 | 2 |
| Antioxidant | 1 | 1 | 1 | 1 | 1 | 1 | 1 | 1 | 1 | 1 | 1 |
| Carbon black | 30 | 30 | 30 | 30 | 30 | 30 | 30 | 30 | 30 | 30 | 30 |

| **Polyamide content** | | | | | | | | | | | |
|---|---|---|---|---|---|---|---|---|---|---|---|
| wt% | 0 | 0.1 | 0.5 | 0.99 | 1.96 | 4.76 | 0.5 | 0.99 | 1.96 | 4.76 | 9.09 |

| **MDR cure response** | | | | | | | | | | | |
|---|---|---|---|---|---|---|---|---|---|---|---|
| ML (dN-m) | 0.2 | 0.3 | 0.2 | 0.2 | 0.2 | 0.2 | 0.3 | 0.3 | 0.4 | 0.3 | 0.3 |
| MH (dN-m) | 9.1 | 9.1 | 8.6 | 8.5 | 8.2 | 8.1 | 7.8 | 9.8 | 6.3 | 8.5 | 8.2 |
| MH-ML (dN-m) | 8.9 | 8.8 | 8.3 | 8.2 | 8.0 | 7.8 | 7.6 | 9.5 | 5.9 | 8.3 | 8.0 |

| **Shore A hardness and tensile properties after press cure and post cure** | | | | | | | | | | | |
|---|---|---|---|---|---|---|---|---|---|---|---|
| Shore A | 62 | 62 | 60 | 61 | 62 | 63 | 61 | 60 | 62 | 60 | 61 |
| Tb (MPa) | 12.6 | 12.3 | 12.7 | 13.1 | 12.5 | 12.7 | 12.8 | 12.4 | 11.3 | 12.2 | 13.4 |
| Eb (%) | 215 | 230 | 215 | 215 | 210 | 235 | 210 | 235 | 175 | 215 | 240 |

| **Shore A hardness and tensile properties after one week hot air aging at 175C** | | | | | | | | | | | |
|---|---|---|---|---|---|---|---|---|---|---|---|
| Shore A | 59 | 59 | 61 | 61 | 62 | 65 | 57 | 60 | 63 | 64 | 65 |
| Tb (MPa) | 2.8 | 6.2 | 7.7 | 9.5 | 10.3 | 10.8 | 2.0 | 9.4 | 10.1 | 10.1 | 8.8 |
| Eb (%) | 50 | 165 | 175 | 225 | 225 | 205 | 75 | 260 | 180 | 195 | 165 |

| **Change in properties after one week hot air aging at 175 C** | | | | | | | | | | | |
|---|---|---|---|---|---|---|---|---|---|---|---|
| Shore A (pts) | -3 | -4 | 1 | 0 | 0 | 2 | -4 | 0 | 1 | 3 | 4 |
| Tb (%) | -78 | -49 | -40 | -27 | -18 | -15 | -84 | -24 | -10 | -17 | -34 |
| Eb (%) | -77 | -28 | -19 | 5 | 7 | -13 | -64 | 11 | 3 | -9 | -31 |

The test results in Table 2 show that all the compounds exhibit good cure response and initial (unaged) physical properties after press cure and post cure. The presence of up to 9.09% polyamide has a negligible effect on the initial Shore A hardness or tensile properties of the cured articles. After one week of aging in hot air at 175°C, however, cured compounds E1-E10 comprising 0.1wt% to 9.09wt% polyamide P1 or P2 have two to four times greater tensile strength and elongation than compound C1 lacking polyamide.

### Example 2

EVA copolymer-polyamide blends B11, B12, and B13 were prepared by mixing EVA copolymer A2 or A3 with polyamide P3 or P4 in the ratios shown in Table 3. These EVA copolymer - polyamide blends were prepared as described for blends B1 through B10 in Example 1.

**Table 3**

| **Blend** | B11 | B12 | B13 |
|---|---|---|---|
| | % | % | % |
| A2 | 60 | | |
| A3 | | 60 | 60 |
| P3 | 40 | 40 | |
| P4 | | | 40 |

| **Mixer set temperature** | | | |
|---|---|---|---|
| deg C | 245 | 245 | 200 |
| | | | |

| **Mooney Viscosity** | | | |
|---|---|---|---|
| MU | 77 | 49 | 48 |

Blends B11-B13 were further diluted with EVA copolymers to form blends comprising 0.1wt% to 10wt% polyamide, as shown in Tables 4 and 5. The blends in Tables 4 and 5 were produced by roll mill mixing blends B11, B12, or B13 with EVA copolymers A2 or A3 at a temperature of about 50°C.

**Table 4**

| **Blend** | B14 | B15 | B16 | B17 | B18 |
|---|---|---|---|---|---|
| | phr | phr | phr | phr | phr |
| A2 | 99.85 | 99.246 | 98.48 | 96.94 | 92.11 |
| **Blend** | B14 | B15 | B16 | B17 | B18 |
| | phr | phr | phr | phr | phr |
| B11 | 0.25 | 1.256 | 2.53 | 5.1 | 13.16 |

| **Polyamide content** | | | | | |
|---|---|---|---|---|---|
| weight % | 0.1 | 0.5 | 1 | 2 | 5 |

| **Mooney Viscosity** | | | | | |
|---|---|---|---|---|---|
| MU | 24 | 24 | 24 | 24 | 25 |

**Table 5**

| **Blend** | B19 | B20 | B21 | B22 | B23 | B24 | B25 | B26 | B27 | B28 | B29 |
|---|---|---|---|---|---|---|---|---|---|---|---|
| | phr | phr | phr | phr | phr | phr | phr | phr | phr | phr | phr |
| A3 | 99.85 | 99.246 | 98.48 | 96.94 | 92.11 | 99.85 | 99.246 | 98.48 | 96.94 | 92.11 | 83.33 |
| B12 | 0.25 | 1.256 | 2.53 | 5.1 | 13.16 | | | | | | |
| B13 | | | | | | 0.25 | 1.256 | 2.53 | 5.1 | 13.16 | 27.78 |

| **Polyamide content** | | | | | | | | | | | |
|---|---|---|---|---|---|---|---|---|---|---|---|
| weight % | 0.1 | 0.5 | 1 | 2 | 5 | 0.1 | 0.5 | 1 | 2 | 5 | 10 |

| **Mooney Viscosity** | | | | | | | | | | | |
|---|---|---|---|---|---|---|---|---|---|---|---|
| MU | 16 | 17 | 17 | 16 | 17 | 18 | 18 | 18 | 18 | 20 | 22 |

Blends B14 through B18 and EVA copolymer A2 were compounded to produce curable compounds C2 and E11 through E15 as shown in Table 6. The compounding procedure used a Brabender Plasti-Corder^{®} equipped with a Prep-Mixer^{®} mixing bowl fitted with cam blades, followed by a final mixing and sheeting on a roll mill at a temperature of about 50°C. In the mixing bowl, the maximum batch temperature was about100°C.

**Table 6**

| **Compound** | C2 | E11 | E12 | E13 | E14 | E15 |
|---|---|---|---|---|---|---|
| | phr | phr | phr | phr | phr | phr |
| A2 | 100 | | | | | |
| B14 | | 100.1 | | | | |
| B15 | | | 100.5 | | | |
| B16 | | | | 101.01 | | |
| B17 | | | | | 102.04 | |
| B18 | | | | | | 105.27 |
| Peroxide | 2 | 2 | 2 | 2 | 2 | 2 |
| Coagent | 5 | 5 | 5 | 5 | 5 | 5 |
| Antioxidant | 1 | 1 | 1 | 1 | 1 | 1 |
| Carbon black | 30 | 30 | 30 | 30 | 30 | 30 |

| **Polyamide content** | | | | | | |
|---|---|---|---|---|---|---|
| wt% | 0 | 0.1 | 0.5 | 1 | 2 | 5 |

| **MDR cure response** | | | | | | |
|---|---|---|---|---|---|---|
| ML (dN-m) | 0.4 | 0.3 | 0.4 | 0.4 | 0.4 | 0.4 |
| MH (dN-m) | 13 | 12.8 | 12.8 | 12.6 | 13.2 | 13.8 |
| MH-ML (dN-m) | 12.6 | 12.5 | 12.4 | 12.2 | 12.8 | 13.4 |

| **Shore A hardness and tensile properties after press cure and post cure** | | | | | | |
|---|---|---|---|---|---|---|
| Shore A (pts) | 55 | 56 | 58 | 58 | 60 | 59 |
| Tb (MPa) | 15.4 | 13.7 | 14.7 | 14.5 | 16 | 15.6 |
| Eb (%) | 215 | 200 | 215 | 215 | 225 | 210 |

| **Compression Set, 70 hours at 150°C** | | | | | | |
|---|---|---|---|---|---|---|
| % | 12 | 13 | 14 | 10 | 10 | 11 |

| **Shore A hardness and tensile properties after one week hot air aging at 175°C** | | | | | | |
|---|---|---|---|---|---|---|
| Shore A (pts) | 56 | 57 | 56 | 52 | 54 | 59 |
| Tb (MPa) | 3.2 | 2.3 | 7.3 | 11 | 10.9 | 12.8 |
| Eb (%) | 45 | 50 | 165 | 245 | 215 | 215 |

| **Shore A hardness and tensile properties after two weeks hot air aging at 175°C** | | | | | | |
|---|---|---|---|---|---|---|
| Shore A (pts) | 76 | nm | nm | 67 | 64 | 59 |
| Tb (MPa) | * | nm | nm | 3.3 | 4.5 | 7.1 |
| Eb (%) | * | nm | nm | 20 | 45 | 95 |
| * too brittle to test nm not measured | | | | | | |

Test results in Table 6 show that the comparative compound C2 and inventive compounds E11 through E15 exhibit good cure response, Shore A hardness, and similar initial tensile properties and compression set resistance. After one week heat aging at 175°C, however, the inventive compounds comprising 0.5wt% to 5wt% polyamide P3 (i.e., E12-E15) exhibit good tensile strength and elongation, whereas compound C2 shows significant loss of properties. After two weeks hot air aging at 175°C, the inventive compound comprising 5% polyamide P3 still retains nearly 100% elongation to break, and exhibits no hardness increase compared to the unaged. The comparative compound is too brittle to test for tensile properties, and exhibits a 20 point Shore A hardness increase.

Blends B19 through B29 and EVA copolymer A3 were compounded to produce curable compounds C3 and E16 through E26 as shown in Table 7. The compounding procedure used a Brabender Plasti-Corder^{®} equipped with a Prep-Mixer^{®} mixing bowl fitted with cam blades, followed by a final mixing and sheeting on a roll mill at a temperature of about 50°C. In the mixing bowl, the maximum batch temperature was about 100°C.

**Table 7**

| **Compound** | | C3 | E16 | E17 | E18 | E19 | E20 | E21 | E22 | E23 | E24 | E25 | E26 |
|---|---|---|---|---|---|---|---|---|---|---|---|---|---|
| | | phr | phr | phr | phr | phr | phr | phr | phr | phr | phr | phr | phr |
| | A3 | 100 | | | | | | | | | | | |
| | B19 | | 100.1 | | | | | | | | | | |
| | B20 | | | 100.5 | | | | | | | | | |
| | B21 | | | | 101 | | | | | | | | |
| | B22 | | | | | 102 | | | | | | | |
| | B23 | | | | | | 105.3 | | | | | | |
| | B24 | | | | | | | 100.1 | | | | | |
| | B25 | | | | | | | | 100.5 | | | | |
| | B26 | | | | | | | | | 101 | | | |
| | B27 | | | | | | | | | | 102 | | |
| | B28 | | | | | | | | | | | 105.3 | |
| | B29 | | | | | | | | | | | | 111.1 |
| | Peroxide | 2 | 2 | 2 | 2 | 2 | 2 | 2 | 2 | 2 | 2 | 2 | 2 |
| | Coagent | 5 | 5 | 5 | 5 | 5 | 5 | 5 | 5 | 5 | 5 | 5 | 5 |
| | Antioxidant | 1 | 1 | 1 | 1 | 1 | 1 | 1 | 1 | 1 | 1 | 1 | 1 |
| | Carbon black | 30 | 30 | 30 | 30 | 30 | 30 | 30 | 30 | 30 | 30 | 30 | 30 |

| **Polyamide content** | | | | | | | | | | | | | |
|---|---|---|---|---|---|---|---|---|---|---|---|---|---|
| | wt% | 0 | 0.1 | 0.5 | 1 | 2 | 5 | 0.1 | 0.5 | 1 | 2 | 5 | 10 |

| **MDR cure response** | | | | | | | | | | | | | |
|---|---|---|---|---|---|---|---|---|---|---|---|---|---|
| | ML (dN-m) | 0.2 | 0.2 | 0.2 | 0.2 | 0.2 | 0.2 | 0.2 | 0.2 | 0.2 | 0.2 | 0.3 | 0.3 |
| | MH (dN-m) | 13 | 13 | 12.8 | 12.7 | 13 | 13.6 | 12.1 | 12.1 | 12.2 | 12.5 | 13.1 | 14.1 |
| | MH-ML (dN-m) | 12.8 | 12.8 | 12.6 | 12.5 | 12.8 | 13.4 | 11.9 | 11.9 | 12 | 12.3 | 12.8 | 13.8 |

| **Shore A hardness and tensile properties after press cure and post cure** | | | | | | | | | | | | | |
|---|---|---|---|---|---|---|---|---|---|---|---|---|---|
| | Shore A (pts) | 68 | 68 | 70 | 68 | 70 | 70 | 70 | 68 | 69 | 70 | 71 | 74 |
| | Tb (MPa) | 16.4 | 16.6 | 16.7 | 17.3 | 17.6 | 17.2 | 16 | 16.3 | 16.1 | 16.1 | 17.2 | 17.7 |
| | Eb (%) | 225 | 245 | 235 | 195 | 245 | 215 | 230 | 200 | 225 | 235 | 215 | 210 |

| **Compression Set, 70 hours at 150°C** | | | | | | | | | | | | | |
|---|---|---|---|---|---|---|---|---|---|---|---|---|---|
| | % | 12 | 16 | 14 | 11 | 10 | 11 | 14 | 13 | 14 | 14 | 14 | 18 |

| **Shore A hardness and tensile properties after one week hot air aging at 175°C** | | | | | | | | | | | | | |
|---|---|---|---|---|---|---|---|---|---|---|---|---|---|
| | Shore A (pts) | 65 | 65 | 66 | 64 | 71 | 64 | 70 | 71 | 69 | 70 | 70 | 75 |
| | Tb (MPa) | 3.8 | 2.8 | 7.9 | 11.6 | 13 | 13.3 | 10.1 | 12.5 | 11.9 | 13.3 | 13.6 | 14.7 |
| | Eb (%) | 60 | 35 | 160 | 215 | 250 | 225 | 230 | 265 | 225 | 245 | 220 | 230 |

| **Shore hardness and tensile properties after two weeks hot air aging at 175°C** | | | | | | | | | | | | | |
|---|---|---|---|---|---|---|---|---|---|---|---|---|---|
| | Shore A (pts) | 85 | nm | nm | 73 | 66 | 71 | 75 | 69 | 69 | 72 | 71 | 73 |
| | Tb (MPa) | * | nm | nm | 3.4 | 4.8 | 7.9 | 4.7 | 4.3 | 6.2 | 8.8 | 10.1 | 12.3 |
| | Eb (%) | * | nm | nm | 20 | 40 | 100 | 35 | 60 | 105 | 145 | 160 | 195 |

Test results in Table 7 show that the comparative compound C3 and inventive compounds E16 through E26 exhibit good cure response, and similar initial Shore A hardness, tensile properties, and compression set resistance. After one week heat aging at 175°C, however, the inventive compounds comprising 0.5wt% to 5wt% polyamide P3 (i.e., E16-E20) exhibit good tensile strength and elongation, whereas compound C2 shows significant loss of properties. After one week heat aging at 175°C, all the inventive compounds comprising polyamide P4 (i.e., E21-E26, comprising 0.1wt% to 10wt% P4) exhibit good tensile strength and elongation. After two weeks hot air aging at 175°C, compound E20 comprising 5% polyamide P3 still retains 100% elongation to break, and compounds E23-E26 comprising 1% to 10% polyamide P4 still exhibit greater than 100% elongation to break. The comparative compound C3 is too brittle to test for tensile properties after two weeks at 175°C, and exhibits a 17 point Shore A hardness increase.

### Example 3

EVA copolymer-polyamide blends B30 through B33 were prepared by mixing EVA copolymer A4 or A5 with polyamide P1 or P2 in the ratios shown in Table 3. These EVA copolymer- polyamide blends were prepared as described for blends B1 through B10 in Example 1.

**Table 8**

| **Blend** | B30 | B31 | B32 | B33 |
|---|---|---|---|---|
| | % | % | % | % |
| A4 | 95.24 | 95.24 | | |
| A5 | | | 95.24 | 95.24 |
| P1 | 4.76 | | 4.76 | |
| P2 | | 4.76 | | 4.76 |

| **Mixer set temperature** | | | | |
|---|---|---|---|---|
| deg C | 130 | 170 | 130 | 170 |

| **Mooney Viscosity** | | | | |
|---|---|---|---|---|
| MU | 19 | 19 | 26 | 24 |

Blends B30 through B33 and EVA copolymers A4 and A5 were compounded to produce curable compounds C4, C5, and E27 through E30 as shown in Table 9. The compounding procedure used a Brabender Plasti-Corder^{®} equipped with a Prep-Mixer^{®} mixing bowl fitted with cam blades, followed by a final mixing and sheeting on a roll mill at a temperature of about 50°C. In the mixing bowl, the maximum batch temperature was about 100°C.

**Table 9**

| Compound | C4 | C5 | E27 | E28 | E29 | E30 |
|---|---|---|---|---|---|---|
| | phr | phr | phr | phr | phr | phr |
| A4 | 100 | | | | | |
| A5 | | 100 | | | | |
| B30 | | | 105 | | | |
| B31 | | | | 105 | | |
| B32 | | | | | 105 | |
| B33 | | | | | | 105 |
| Peroxide | 2 | 2 | 2 | 2 | 2 | 2 |
| Coagent | 5 | 5 | 5 | 5 | 5 | 5 |
| Antioxidant | 1 | 1 | 1 | 1 | 1 | 1 |
| Carbon black | 30 | 30 | 30 | 30 | 30 | 30 |

| **Polyamide content** | | | | | | |
|---|---|---|---|---|---|---|
| wt% | 0 | 0 | 4.76 | 4.76 | 4.76 | 4.76 |

| **MDR cure response** | | | | | | |
|---|---|---|---|---|---|---|
| ML (dN-m) | 0.3 | 0.4 | 0.3 | 0.3 | 0.4 | 0.3 |
| MH (dN-m) | 18.3 | 15.5 | 16.1 | 16.3 | 13.2 | 13.4 |
| MH-ML (dN-m) | 18.0 | 15.1 | 15.8 | 16.0 | 12.8 | 13.1 |

| **Shore A hardness and tensile properties after press cure and post cure** | | | | | | |
|---|---|---|---|---|---|---|
| Shore A (pts) | 87 | 91 | 85 | 85 | 91 | 93 |
| Tb (MPa) | 24.0 | 23.6 | 23.4 | 24.3 | 24.9 | 23.7 |
| Eb (%) | 225 | 215 | 235 | 255 | 270 | 230 |

| **Compression Set, 70 hours at 150°C** | | | | | | |
|---|---|---|---|---|---|---|
| % | 12 | 11 | 13 | 20 | 11 | 17 |

| **Shore A hardness and tensile properties after one week hot air aging at 175°C** | | | | | | |
|---|---|---|---|---|---|---|
| Shore A (pts) | 83 | 91 | 87 | 86 | 93 | 91 |
| Tb (MPa) | 3.9 | 6.0 | 19.9 | 19.4 | 20.6 | 20.3 |
| Eb (%) | 15 | 15 | 250 | 240 | 225 | 230 |

The test results in Table 9 show that the comparative and inventive compounds based on EVA copolymer A4 (C4 and E27, E28 respectively) exhibit good cure response and similar initial Shore A hardness and tensile properties. The comparative and invention compounds based on EVA copolymer A5 (C5 and E29, E30 respectively) also exhibit similarly good cure response and initial Shore A hardness and tensile properties. After hot air aging for one week at 175°C, however, comparative compounds C4 and C5 have lost at least 75% of their initial tensile strength and elongation, while inventive compounds E27 through E30, have lost only 20% or less of their initial tensile strength and elongation.

## Claims

1. A heat resistant curable ethylene vinyl acetate (EVA) copolymer - polyamide blend composition comprising:
(A) from 99.9wt% to 90wt% of an EVA component selected from one or more of
(i) amorphous EVA copolymers;
(ii) EVA copolymers wherein each has melting peak temperatures of 100°C or less as determined by ASTM D3418-08; or
(iii) combinations thereof;
(B) from 0.1wt% to 10wt% of one or more polyamides;
wherein the weight percent of the polyamides and the EVA component are based on the total combined amount of EVA component and polyamides in the blend, and the blend composition has a Mooney viscosity determined according to ASTM D1646, **ML** 1+4 at 100°C less than 200; and
(C) a peroxide curative;
with the proviso that Compositions E9, E11, E14 and CE7 of WO 2014/042943 A1 are excluded,
wherein said curable composition does not contain ethylene copolymers comprising copolymerized or grafted acid reactive functionality,
and wherein said curable composition, upon curing, forms a thermoset material.

2. The composition of claim 1 wherein each of the one or more EVA copolymer comprises from 18wt% to 90wt% of vinyl acetate based on the weight of the EVA.

3. The composition of claim 1 wherein the EVA component has a Mooney viscosity determined according to ASTM D1646, ML 1+4 at 100°C of less than 120.

4. The composition of claim 1 wherein each of the one or more polyamides has a melting peak temperature of less than 270°C as determined according to ASTM D3418-08.

5. The composition of claim 4 wherein each of the one or more polyamides has a melting peak temperature of less than 160°C.

6. The composition of claim 1 wherein at least one of said one or more polyamides is selected from nylon 6, nylon 6/6 or combinations thereof.

7. The composition of claim 1 comprising from 1wt% to 5wt% of the one or more polyamides.

8. The composition of claim 1 wherein said composition has an increase in torque MH-ML of at least 2.5dN-m when tested in a rotorless cure meter at conditions of 177°C for 24 minutes per ASTM D5289-07a.

9. An article produced from the blend composition of claim 1.

10. The article of claim 9 wherein said article is wire or cable jacketing, spark plug boot, hose, belt, molded boot, seal, gasket, tubing, hose or grommet.

11. A process for producing the composition of claim 1 comprising:
(A) providing said EVA component;
(B) providing said one or more polyamides; and
(C) mixing the EVA component and polyamide at
(i) a temperature greater than the melting peak temperatures of the one or more polyamides; and
(ii) where the EVA component exhibits a melting peak temperature, at a temperature greater than the melting peak temperatures of the EVA copolymers;
thereby dispersing said polyamide in said EVA component to form an EVA copolymer - polyamide blend composition
(D) optionally, cooling the EVA copolymer - polyamide blend composition of (C) to a temperature of less than 160°C; and
(E) adding a peroxide curative at a temperature less than 160°C to form the curable ethylene vinyl acetate (EVA) copolymer - polyamide composition.

12. A process for production of the composition of claim 1, the process comprising the steps:
(A) providing the EVA component; and
(B) providing the one or more polyamides having melting peak temperatures less than 160°C; and
(C) providing a peroxide curative; and
(D) mixing the EVA component, the one or more polyamides, and peroxide together
(i) at a temperature of 160°C or less, and greater than the melting peak temperatures of the one or more polyamides; and
(ii) where the EVA component exhibits a melting peak temperature, at a temperature greater than the melting peak temperatures of the EVA component,
thereby dispersing the peroxide and 0.1wt% to 10wt% polyamide in the one or more EVA component;
wherein the weight percent polyamide is based on the total amount of EVA component and polyamide in the blend,
thereby producing a curable EVA copolymer-polyamide blend composition having a Mooney viscosity (ML1+4, 100°C) according to ASTM D-1646 of less than 200.

13. A process for production of the composition of claim 1, the process comprising the steps
(A) providing the EVA component; and
(B) providing the one or more polyamides having one or more melting peak temperatures; and
(C) mixing the EVA component and the one or more polyamides at a temperature greater than the melting peak temperatures of the one or more polyamides and, where the EVA component has a melting peak temperature, at a temperature greater than the melting peak temperatures of the EVA component,
thereby dispersing up to 60wt% polyamide in the one or more EVA component to form an intermediate blend composition;
wherein the weight percent polyamide is based on the total amount of EVA and polyamides in the blend and the blend has a Mooney viscosity (ML1+4, 100°C) according to ASTM D-1646 of less than 200; and
(D) mixing the intermediate blend composition of (C) with an EVA component having melting peak temperatures of 100°C or less to form an EVA copolymer - polyamide blend comprising 0.1wt% to 10wt% polyamide wherein the weight percent polyamide is based on the total amount of EVA and polyamide polymers in the blend, and the blend has a Mooney viscosity (ML1+4, 100°C) according to ASTM D-1646 of less than 200; and
(E) adding a peroxide curative to the EVA copolymer - polyamide blend of (D) at a temperature less than 160°C to form the curable blend composition.

14. The process of claim 11, 12 or 13, in which the curable composition exhibits an increase in torque MH-ML of at least 2.5dN-m when tested in a rotorless cure meter at conditions of 177°C for 24 minutes per ASTM D5289-07a.

15. A process for a producing a cured article, the process comprising:
(A) providing the heat resistant curable ethylene vinyl acetate (EVA) copolymer - polyamide blend composition of claim 1;
(B) heating the blend composition, optionally in a mold of a desired article, to a temperature greater than 160°C for at least one minute, thereby forming a cured article.

## Patentansprüche

1. Wärmeresistente, aushärtbare Zusammensetzung aus Ethylenvinylacetat- (EVA) Copolymer-Polyamidmischung umfassend:
(A) 99,9 Gew.-% bis 90 Gew.-% einer EVA-Komponente ausgewählt aus einem oder mehreren von
(i) amorphen EVA-Copolymeren;
(ii) EVA-Copolymeren, wobei jedes Schmelzhöchsttemperaturen von 100 °C oder weniger, wie ASTM D3418-08 entsprechend bestimmt, aufweist; oder
(iii) Kombinationen davon;
(B) 0,1 Gew.-% bis 10 Gew.-% eines oder mehrerer Polyamide,
wobei die Gewichtsprozente der Polyamide und der EVA-Komponente auf der gesamten kombinierten Menge der EVA-Komponente und Polyamide in der Mischung bezogen sind, und die Mischungszusammensetzung eine Mooney-Viskosität, ASTM D1646, ML 1+4 entsprechend bei 100 °C gemessen, von weniger als 200 aufweist, und
(C) ein Peroxidaushärtungsmittel,
mit der Maßgabe, dass die Zusammensetzungen E9, E11, E14 und CE7 von WO 2014/042943 A1 ausgeschlossen sind,
wobei die aushärtbare Zusammensetzung keine Ethylen-Copolymere enthält, die eine auf copolymerisierte oder gepfropfte Säure reaktive Funktionalität umfasst,
und wobei die aushärtbare Zusammensetzung, auf das Aushärten hin, ein Duroplastmaterial bildet.

2. Zusammensetzung nach Anspruch 1, wobei jedes von dem einen oder den mehreren EVA-Copolymeren 18 Gew.-% bis 90 Gew.-% Vinylacetat, auf das Gewicht des EVA bezogen, umfasst.

3. Zusammensetzung nach Anspruch 1, wobei die EVA-Komponente eine Mooney-Viskosität, ASTM D1646, ML 1+4 entsprechend bei 100 °C bestimmt, von weniger als 120 aufweist.

4. Zusammensetzung nach Anspruch 1, wobei jedes von dem einen oder den mehreren Polyamiden eine Schmelzspitzentemperatur von weniger als 270 °C, wie ASTM D3418-08 entsprechend bestimmt, aufweist.

5. Zusammensetzung nach Anspruch 4, wobei jedes von dem einen oder den mehreren Polyamiden eine Schmelzspitzentemperatur von weniger als 160 °C aufweist.

6. Zusammensetzung nach Anspruch 1, wobei mindestens eines von dem einen oder den mehreren Polyamiden unter Nylon 6, Nylon 6/6 oder Kombinationen davon ausgewählt wird.

7. Zusammensetzung nach Anspruch 1 umfassend 1 Gew.-% bis 5 Gew.-% des einen oder der mehreren Polyamide.

8. Zusammensetzung nach Anspruch 1, wobei die Zusammensetzung eine Erhöhung des Drehmoments MH-ML von mindestens 2,5 dN-m aufweist, wenn sie in einer rotorfreien Aushärtungsmessvorrichtung unter Bedingungen von 177 °C 24 Minuten lang ASTM D5289-07a entsprechend getestet wird.

9. Artikel, der aus der Mischungszusammensetzung nach Anspruch 1 hergestellt ist.

10. Artikel nach Anspruch 9, wobei der Artikel eine Draht- oder Kabelumhüllung, ein Zündkerzenstecker, Schlauch, Gürtel, eine geformte Muffe, Abdichtung, Dichtung, Röhre, ein Schlauch oder eine Dichtungshülse ist.

11. Verfahren zum Herstellen der Zusammensetzung nach Anspruch 1, umfassend:
(A) Bereitstellen der EVA-Komponente;
(B) Bereitstellen des einen oder der mehreren Polyamide; und
(C) Mischen der EVA-Komponente und des Polyamids bei
(i) einer Temperatur höher als die Schmelzspitzentemperaturen des einen oder der mehreren Polyamide; und
(ii) wobei die EVA-Komponente eine Schmelzspitzentemperatur bei einer Temperatur aufweist, die höher ist als die Schmelzspitzentemperaturen der EVA-Copolymere,
wodurch das Polyamid in der EVA-Komponente dispergiert wird, um eine Zusammensetzung aus EVA-Copolymer-Polyamidmischung zu bilden
(D) wahlweise Kühlen der Zusammensetzung aus EVA-Copolymer-Polyamidmischung von (C) auf eine Temperatur von weniger als 160 °C; und
(E) Zusetzen eines Peroxidaushärtungsmittels bei einer Temperatur von weniger als 160 °C, um die aushärtbare Zusammensetzung aus Ethylenvinylacetat- (EVA) Copolymer-Polyamid zu bilden.

12. Verfahren für die Herstellung der Zusammensetzung nach Anspruch 1, wobei das Verfahren die folgenden Schritte umfasst:
(A) Bereitstellen der EVA-Komponente: und
(B) Bereitstellen des einen oder der mehreren Polyamide, die Schmelzspitzentemperaturen von weniger als 160 °C aufweisen; und
(C) Bereitstellen eines Peroxidaushärtungsmittels; und
(D) Zusammenmischen der EVA-Komponente, des einen oder der mehreren Polyamide und des Peroxids
(i) bei einer Temperatur von 160 °C oder weniger und höher als die Schmelzspitzentemperaturen des einen oder der mehreren Polyamide; und
(ii) wobei die EVA-Komponente eine Schmelzspitzentemperatur bei einer Temperatur aufweist, die höher ist als die Schmelzspitzentemperaturen der EVA-Komponente,
wodurch das Peroxid und 0,1 Gew.-% bis 10 Gew.-% Polyamid in der einen oder den mehreren EVA-Komponenten dispergiert werden,
wobei die Gewichtsprozente von Polyamid auf die Gesamtmenge von EVA-Komponente und Polyamid in der Mischung bezogen sind,
wodurch eine aushärtbare Zusammensetzung aus EVA-Copolymer-Polyamidmischung hergestellt wird, die eine Mooney-Viskosität (ML 1+4, 100°C) ASTM D-1646 entsprechend von weniger als 200 aufweist.

13. Verfahren für die Herstellung der Zusammensetzung nach Anspruch 1, wobei das Verfahren die folgenden Schritte umfasst:
(A) Bereitstellen der EVA-Komponente; und
(B) Bereitstellen des einen oder der mehreren Polyamide, die eine oder mehrere Schmelzspitzentemperaturen aufweisen; und
(C) Mischen der EVA-Komponente und des einen oder der mehreren Polyamide bei einer Temperatur, die höher ist als die Schmelzspitzentemperaturen des einen oder der mehreren Polyamide und wobei die EVA-Komponente eine Schmelzspitzentemperatur bei einer Temperatur aufweist, die höher ist als die Schmelzspitzentemperaturen der EVA-Komponente,
wodurch bis zu 60 Gew.-% Polyamid in der einen oder den mehreren EVA-Komponenten dispergiert werden, um eine dazwischenliegende Mischungszusammensetzung zu bilden;
wobei die Gewichtsprozente von Polyamid auf die Gesamtmenge von EVA und Polyamiden in der Mischung bezogen sind und die Mischung eine Mooney-Viskosität (ML 1+4, 100°C) ASTM D-1646 entsprechend von weniger als 200 aufweist; und
(D) Mischen der dazwischenliegenden Mischungszusammensetzung von (C) mit einer EVA-Komponente, die Schmelzspitzentemperaturen von 100 °C oder weniger aufweisen, um eine EVA-Copolymer-Polyamidmischung zu bilden, die 0,1 Gew.-% bis 10 Gew.-% Polyamid umfasst, wobei die Gewichtsprozente von Polyamid auf der gesamten Menge EVA- und Polyamidpolymeren in der Mischung bezogen sind, und die Mischung eine Mooney-Viskosität (ML 1+4, 100°C) ASTM D-1646 entsprechend von weniger als 200 aufweist, und
(E) Zusetzen eines Peroxidaushärtungsmittels zu der EVA-Copolymer-Polyamidmischung von (D) bei einer Temperatur von weniger als 160 °C, um die aushärtbare Mischungszusammensetzung zu bilden.

14. Verfahren nach Anspruch 11, 12 oder 13, wobei die aushärtbare Zusammensetzung eine Erhöhung des Drehmoments MH-ML von mindestens 2,5 dN-m aufweist, wenn sie in einer rotorfreien Aushärtungsmessvorrichtung unter Bedingungen von 177 °C 24 Minuten lang ASTM D5289-07a entsprechend getestet wird.

15. Verfahren zum Herstellen eines ausgehärteten Artikels, wobei das Verfahren Folgendes umfasst:
(A) Bereitstellen der wärmeresistenten, aushärtbaren Zusammensetzung aus Ethylenvinylacetat- (EVA) Copolymer-Polyamidmischung nach Anspruch 1,
(B) Erwärmen der Mischungszusammensetzung, wahlweise in einer Form eines erwünschten Artikels, auf eine Temperatur von mehr als 160 °C mindestens eine Minute lang, um dadurch einen ausgehärteten Artikel zu bilden.

## Revendications

1. Composition de mélange de copolymère d'éthylène-acétate de vinyle (EVA)-polyamide résistante à la chaleur et durcissable comprenant :
(A) de 99,9 % en poids à 90 % en poids d'un composant d'EVA sélectionné parmi un ou plusieurs parmi :
(i) des copolymères d'EVA amorphes
(ii) des copolymères d'EVA dans lesquels chacun a des températures de pic de fusion de 100 °C ou moins tel qu'il est déterminé selon ASTM D3418-08, ou
(iii) des combinaisons de ceux-ci,
(B) de 0,1 % en poids à 10 % en poids d'un ou plusieurs polyamides,
dans laquelle le pourcentage en poids des polyamides et du composant d'EVA se rapportent à la quantité totale combinée du composant d'EVA et des polyamides dans le mélange, et la composition de mélange a une viscosité Mooney déterminée selon ASTM D1646, ML 1+4 à 100 °C inférieure à 200, et
(C) un agent durcissant de peroxyde,
à la condition que les compositions E9, E11, E14 et CE7 selon le brevet WO 2014/042943 A1 soient exclues,
dans laquelle ladite composition durcissable ne contient pas de copolymères d'éthylène comprenant une fonctionnalité réactive à l'acide copolymérisée ou greffée,
et dans laquelle ladite composition durcissable, après durcissement, forme un matériau thermodurci.

2. Composition selon la revendication 1, dans laquelle chacun des un ou plusieurs copolymères d'EVA comprend de 18 % en poids à 90 % en poids d'acétate de vinyle, rapporté au poids de l'EVA.

3. Composition selon la revendication 1, dans laquelle le composant d'EVA a une viscosité Mooney déterminée selon ASTM D1646 ML 1+4 à 100 °C inférieure à 120.

4. Composition selon la revendication 1, dans laquelle chacun des un ou plusieurs polyamides a une température de pic de fusion inférieure à 270 °C tel qu'il est déterminé selon ASTM D3418-08.

5. Composition selon la revendication 4, dans laquelle chacun des un ou plusieurs polyamides a une température de pic de fusion inférieure à 160 °C.

6. Composition selon la revendication 1, dans laquelle au moins l'un desdits un ou plusieurs polyamides est sélectionné parmi le nylon 6, le nylon 6-6 ou des combinaisons de ceux-ci.

7. Composition selon la revendication 1, comprenant de 1 % en poids à 5 % en poids des un ou plusieurs polyamides.

8. Composition selon la revendication 1, dans laquelle ladite composition présente une augmentation du couple MH-ML d'au moins 2,5 dN-m, lorsqu'elle est testée dans un rhéomètre sans rotor à une température de 177 °C pendant 24 minutes selon ASTM D5289-07a.

9. Article produit à partir de la composition de mélange selon la revendication 1.

10. Article selon la revendication 9, dans lequel ledit article est un gainage de fil ou de câble, une coiffe de bougie d'allumage, un tuyau flexible, une courroie, un manchon moulé, une garniture d'étanchéité, un joint, un tube, un tuyau flexible ou un guide.

11. Procédé pour produire la composition selon la revendication 1, comprenant :
(A) la fourniture dudit composant d'EVA,
(B) la fourniture desdits un ou plusieurs polyamides, et
(C) le mélange du composant d'EVA et du polyamide, à
(i) une température supérieure aux températures de pic de fusion des un ou plusieurs polyamides, et
(ii) lorsque le composant d'EVA présente une température de pic de fusion, à une température supérieure aux températures de pic de fusion des copolymères d'EVA,
dispersant ainsi ledit polyamide dans ledit composant d'EVA pour former une composition de mélange de copolymère d'EVA-polyamide,
(D) optionnellement, le refroidissement de la composition de mélange de copolymère d'EVA-polyamide de l'étape (C) à une température inférieure à 160 °C, et
(E) l'ajout d'un agent durcissant de peroxyde à une température inférieure à 160 °C pour former la composition de copolymère éthylène-acétate de vinyle / polyamide durcissable.

12. Procédé de production de la composition selon la revendication 1, le procédé comprenant les étapes suivantes :
(A) la fourniture du composant d'EVA, et
(B) la fourniture des un ou plusieurs polyamides ayant des températures de pic de fusion inférieures à 160 °C, et
(C) la fourniture d'un agent durcissant de peroxyde, et
(D) le mélange du composant d'EVA, des un ou plusieurs polyamides, et du peroxyde,
(i) à une température de 160 °C ou moins, et supérieure aux températures de pic de fusion des un ou plusieurs polyamides, et
(ii) lorsque le composant d'EVA présente une température de pic de fusion, à une température supérieure aux températures de pic de fusion du composant d'EVA,
dispersant ainsi le peroxyde et 0,1 % en poids à 10 % en poids de polyamide dans les un ou plusieurs composants d'EVA,
dans lequel le pourcentage en poids de polyamide se rapporte à la quantité totale du composant d'EVA et du polyamide dans le mélange,
produisant ainsi une composition de mélange de copolymère EVA-polyamide durcissable ayant une viscosité Mooney (ML 1+4, 100 °C) selon ASTM D-1646 inférieure à 200.

13. Procédé de production de la composition selon la revendication 1, le procédé comprenant les étapes suivantes :
(A) la fourniture du composant EVA, et
(B) la fourniture des un ou plusieurs polyamides ayant une ou plusieurs températures de pic de fusion, et
(C) le mélange du composant EVA et des un ou plusieurs polyamides à une température supérieure aux températures de pic de fusion des un ou plusieurs polyamides, et, lorsque le composant EVA présente une température de pic de fusion, à une température supérieure aux températures de pic de fusion du composant EVA,
dispersant ainsi jusqu'à 60 % en poids de polyamide dans les un ou plusieurs composants EVA pour former une composition de mélange intermédiaire,
dans lequel le pourcentage en poids de polyamide se rapporte à la quantité totale d'EVA et des polyamides dans le mélange, et le mélange a une viscosité Mooney (ML 1+4, 100 °C) selon ASTM D-1646 inférieure à 200, et
(D) le mélange de la composition de mélange intermédiaire de l'étape (C) et d'un composant EVA ayant des températures de pic de fusion de 100 °C ou moins pour former un mélange copolymère EVA - polyamide comprenant 0,1 % en poids à 10 % en poids de polyamide, dans lequel le pourcentage en poids de polyamide se rapporte à la quantité totale des polymères d'EVA et de polyamide dans le mélange, et le mélange a une viscosité Mooney (ML1+4, 100 °C) selon ASTM D-1646 inférieure à 200, et
(E) l'ajout d'un agent durcissant de peroxyde au mélange de copolymère EVA - polyamide de l'étape (D) à une température inférieure à 160 °C pour former la composition de mélange durcissable.

14. Procédé selon la revendication 11, 12 ou 13, dans lequel la composition durcissable présente une augmentation du couple MH-ML d'au moins 2,5 dN-m lorsqu'elle est testée dans un rhéomètre sans rotor à une température de 177 °C pendant 24 minutes selon ASTM D5289-07a.

15. Procédé de production d'un article durci, le procédé comprenant :
(A) la fourniture de la composition de mélange de copolymère d'éthylène-acétate de vinyle (EVA)-polyamide résistante à la chaleur et durcissable selon la revendication 1,
(B) le chauffage de la composition de mélange, optionnellement dans un moule d'un article souhaité, à une température supérieure à 160 °C pendant au moins une minute, formant ainsi un article durci.
